# EUROPEAN PATENT SPECIFICATION

(11) **EP 2 202 123 B1**
(45) Date of publication and mention of the grant of the patent: **28.11.2012**
(21) Application number: 09179404.0
(22) Date of filing: 16.12.2009
(51) Int. Cl.: B60W 30/19, B60W 10/02, B60W 10/06, B60W 10/11

(54) **Control system and saddle-straddling type vehicle including the same**
Steuerungssystem und Spreizsattelfahrzeug damit
Système de commande et véhicule de type à enfourcher l'incluant

(30) Priority: 24.12.2008 JP 2008326916
(43) Date of publication of application: 30.06.2010
(73) Proprietor: Yamaha Hatsudoki Kabushiki Kaisha, Iwata-shi, Shizuoka 438-8501 (JP)
(72) Inventor: Mizutani Takaaki c/o Yamaha Hatsudoki Kabushiki Kaisha, Shizuoka-ken Shizuoka 438-8501 (JP); Sakai, Kouji c/oYamaha Hatsudoki Kabushiki Kaisha, Shizuoka-ken Shizuoka 438-8501 (JP); Miura, Atsushi c/o Yamaha Hatsudoki Kabushiki Kaisha, Shizuoka-ken Shizuoka 438-8501 (JP); Watanabe, Hiroto c/o Yamaha Hatsudoki Kabushiki Kaisha, Shizuoka-ken Shizuoka 438-8501 (JP)
(74) Representative: Zimmermann, Tankred Klaus

(56) References cited:
- EP-A1- 1 935 738
- EP-A2- 0 922 604

## Description

### BACKGROUND OF THE INVENTION

### Field of the invention

The present invention relates to a control system that carries out output control of an engine based on a shifting operation by a rider and a saddle-straddling type vehicle including the same.

### Description of the Background Art

When operating gearshifts in vehicles with manual transmissions, first, riders usually disengage clutches. Thus, the transmission of power from crankshafts in engines to main shafts in the transmissions is stopped, so that gears are easily disconnected. In this state, the riders perform shifting operations and change gear positions. Finally, the riders engage the clutches, to transmit the power from the crankshafts to the main shafts. This results in completion of the gearshifts.

Gearshifts are required to be quickly operated in races or others. Therefore, the riders may operate the gearshifts without performing clutch operations (hereinafter referred to as "clutchless shifting"). In this case, the gearshifts are operated with the power transmitted from the crankshafts to the main shafts. Thus, the gears are difficult to disconnect. Therefore, the riders must adjust outputs of the engines such that the gears can be easily disconnected.

The adjustments of the outputs of the engines are difficult to handle for less skilled riders. If the less skilled riders perform the clutchless shifting, therefore, the gearshifts may not be operated smoothly.

Conventionally, a device that controls an output of an engine in clutchless shifting has been developed (see JP 6-146941 A, for example).

In the engine output control device discussed in JP 6-146941 A, when a rider performs a shifting operation, ignition timing for the engine is retarded by an ignition control device. This causes a driving force exerted between a gear on the output shaft side of a transmission and a gear on the input shaft side thereof to be reduced. As a result, the rider can perform a smooth shifting operation.

In the above-mentioned engine output control device, a clutch lever is provided with a limit switch. This causes the limit switch to operate when the rider operates the clutch lever, to inhibit control of the ignition timing by the ignition control device. This prevents the output of the engine from being controlled with the clutch disengaged.

Despite the provision of the limit switch still a traveling feeling of the rider may be reduced.

EP 1 935 738 A1, which discloses the features of the preamble of claim 1, describes motorcycle that includes an engine, a CPU, a clutch lever, and a shift switch. When a driver performs a shift operation, the CPU adjusts an output of the engine. When the CPU adjusts the output of the engine, the turning operation of the clutch lever is inhibited by the shift switch. The inhibiting mechanism may also inhibit the output of the engine from being adjusted by the engine output adjuster when the driver disconnects the clutch.

EP 0 922 604 A2 describes a shift by wire vehicle transmission system that includes control methods that are especially useful for controlling the transmission under start-from-stop conditions. Since the master clutch must be manually operated under such conditions, the invention includes a method of determining whether the clutch is open or closed. The rotational speed of the engine output shaft is compared to the rotational speed of the transmission input shaft and if the difference between those speeds is greater than a preselected value, the clutch is determined to be open.

### SUMMARY OF THE INVENTION

It is an object of the invention to provide a control system that enables a smooth shifting operation without reducing a traveling feeling and a saddle-straddling type vehicle including the same.

This object is achieved by a control system according to claim 1, and by a saddle-straddling type vehicle according to claim 5.

According to a preferred embodiment of the present invention, a control system that controls, in a vehicle that transmits the rotation of a crank shaft in an engine to a driving wheel through a clutch and a transmission, an output of the engine includes a first rotational speed detector that detects the rotational speed of the crank shaft in the engine as a first rotational speed, a second rotational speed detector that detects the rotational speed of the rotating shaft in the transmission as a second rotational speed, an adjustor that adjusts the output of the engine, and a controller that determines a engaged state and a disengaged state of the clutch based on the first rotational speed and the second rotational speed, and inhibits the output of the engine from being adjusted by the adjuster when the clutch is determined to be in the disengaged state.

In the control system, the first rotational speed detector detects the rotational speed of the crank shaft as the first rotational speed. The second rotational speed detector detects the rotational speed of the rotating shaft in the transmission as the second rotational speed.

The state of the clutch is determined based on the first rotational speed of the crank shaft and the second rotational speed of the rotating shaft, which have been detected.

When the clutch is in the engaged state, the rotation of the crank shaft in the engine is transmitted to the driving wheel through the rotating shaft in the transmission. The adjuster adjusts the output of the engine in this state so that a rider can perform a smooth shifting operation.

In the present invention, the adjustment of the output of the engine means that the output of the engine is increased or decreased by a predetermined amount from an output corresponding to an accelerator opening. The predetermined amount is set such that an engagement force between a dog and a dog hole that are formed in gears of the transmission is reduced. This enables a state where the gears of the transmission engage with each other to be smoothly changed.

On the other hand, when the clutch is in the disengaged state, the rotation of the crank shaft in the engine is not transmitted to the driving wheel. In this state, the output of the engine is inhibited from being adjusted by the adjuster. This prevents a shift shock from occurring when the clutch is shifted from the disengaged state to the engaged state. This prevents the reduction in a traveling feeling of the rider.

The transmission further includes a speed reduction mechanism that transmits the rotation of the crank shaft to the rotating shaft at a predetermined reduction gear ratio, and the controller calculates, based on one of the first rotational speed and the second rotational speed and the reduction gear ratio, an estimated value of the other rotational speed, and determines the engaged state and the disengaged state of the clutch based on a difference value between the other rotational speed and the estimated value.

When the clutch is in the engaged state, the speed reduction mechanism transmits the rotation of the crank shaft in the engine to the rotating shaft in the transmission at the predetermined reduction gear ratio. Therefore, based on one of the first and second rotational speeds and the reduction gear ratio in the speed reduction mechanism, the estimated value of the other reduction gear ratio is calculated. The engaged state and the disengaged state of the clutch are determined based on the difference value between the first or second rotational speed and the estimated value. This enables the engaged state and the disengaged state of the clutch to be easily and accurately determined.

The controller determines that the clutch is in the disengaged state when the difference value is more than an upper limit previously set or is less than a lower limit previously set, while determining that the clutch is in the engaged state when the difference value is the upper limit or less and is the lower limit or more.

Theoretically, when the clutch is in the engaged state, the difference value between the first or second rotational speed and the estimated value becomes zero. If the clutch is in the engaged state, however, the difference value between the first or second rotational speed and the estimated value may not be actually zero due to various factors.

The controller determines whether or not the difference value between the first or second rotational speed and the estimated value is more than the upper limit previously set or is less than the lower limit previously set. It is determined that the clutch is in the disengaged state when the difference value is more than the upper limit previously set or is less than the lower limit previously set. It is determined that the clutch is in the engaged state when the difference value is the upper limit or less and is the lower limit or more. Thus, the clutch is prevented from being erroneously determined to be in the disengaged state when engaged.

(8) The controller determines that the clutch is shifted from the engaged state to the disengaged state when the state where the difference value is more than the upper limit or is less than the lower limit is continued for a first period previously set.

Theoretically, at a time point where the absolute value of the difference value between the first or second rotational speed and the estimated value is more than the threshold value, the clutch is shifted from the engaged state to the disengaged state. At the time point where the absolute value of the difference value is more than the threshold value, however, the clutch may not be actually shifted from the engaged state to the disengaged state due to various factors.

If the state where the difference value is more than the upper limit or is less than the lower limit is continued for the first period previously set, the controller determines that the clutch is shifted from the engaged state to the disengaged state. Thus, the clutch is prevented from being erroneously determined to be shifted to the disengaged state when engaged.

Particularly, it is determined whether or not the period of time during which the state where the difference value is more than the upper limit or is less than the lower limit is continued reaches the first period. In this case, even when the difference value is instantly changed from the state where the difference value is more than the upper limit to the state where the difference value is less than the lower limit, for example, the above-mentioned continuation period is prevented from being reset. Thus, the clutch is prevented from being erroneously determined to be maintained in the engaged state, although disengaged.

The controller may determine that the clutch is shifted from the disengaged state to the engaged state when the state where the difference value is the upper limit or less and is the lower limit or more is continued for a second period previously set.

Theoretically, at a time point where the difference value between the first or second rotational speed and the estimated value is the upper limit or less and is the lower limit or more, the clutch is shifted from the disengaged state to the engaged state. At the time point where the difference value is the upper limit or less and is the lower limit or more, however, the clutch may not be actually shifted from the disengaged state to the engaged state due to various factors.

If the state where the difference value is the upper limit or less and is the lower limit or more is continued for the second period, the controller determines that the clutch is shifted from the disengaged state to the engaged state. Thus, the clutch is prevented from being erroneously determined to be shifted to the engaged state when disengaged.

The clutch may include a back torque limiter mechanism that operates such that a difference occurs between the rotational speed of the crank shaft and the rotational speed of the rotating shaft in the transmission when a relative torque generated between the crank shaft and the rotating shaft in the transmission exceeds a previously set value, and the first period may be set longer than the second period.

In this case, if the relative torque generated between the crank shaft and the rotating shaft in the transmission exceeds the previously set value, the back torque limiter mechanism operates. This causes the difference to occur between the rotational speed of the crank shaft and the rotational speed of the rotating shaft in the transmission. As a result, the relative torque between the crank shaft and the rotating shaft in the transmission is reduced so that a shock produced by the relative torque is cushioned.

Setting the first period longer than the second period can prevent determination that the clutch is shifted from the engaged to the disengaged state even if the back torque limiter mechanism operates. This can prevent the adjustment of the output of the engine from being terminated by the instant operation of the back torque limiter mechanism.

According to another preferred embodiment of the present invention, a saddle-straddling type vehicle includes a driving wheel, an engine including a crank shaft, a transmission that includes a rotating shaft, and transmits the rotation of the crank shaft in the engine to a driving wheel at a plurality of reduction gear ratios depending on different engaging states of a plurality of gears provided in the rotating shaft, a clutch provided between the crank shaft in the engine and the rotating shaft in the transmission, and the control system according to the above-mentioned preferred embodiment.

In the saddle-straddling type vehicle, when the clutch is in the engaged state, the transmission transmits the rotation of the crank shaft in the engine to the driving wheel at the predetermined reduction gear ratio. This causes the saddle-straddling type vehicle to travel. When the clutch is in the disengaged state, the rotation of the crank shaft in the engine is not transmitted to the driving wheel.

The saddle-straddling type vehicle is provided with the control system according to the above-mentioned preferred embodiment. In the control system, the first rotational speed detector detects the rotational speed of the crank shaft as the first rotational speed. The second rotational speed detector detects the rotational speed of the rotating shaft in the transmission as the second rotational speed.

The state of the clutch is determined based on the first rotational speed of the crank shaft and the second rotational speed of the rotating shaft, which have been detected.

When the clutch is in the engaged state, the rotation of the crank shaft in the engine is transmitted to the driving wheel through the rotating shaft in the transmission. The adjuster adjusts the output of the engine in this state so that a rider can perform a smooth shifting operation.

In the present invention, the adjustment of the output of the engine means that the output of the engine is increased or decreased by a predetermined amount from an output corresponding to an accelerator opening. The predetermined amount is set such that an engagement force between a dog and a dog hole that are formed in the gears of the transmission is reduced. This enables the engaging state of the gears of the transmission to be smoothly changed.

On the other hand, when the clutch is in the disengaged state, the rotation of the crank shaft in the engine is not transmitted to the driving wheel. In this state, the adjuster is inhibited from adjusting the output of the engine. This prevents a shift shock from occurring when the clutch is shifted from the disengaged state to the engaged state. This prevents the reduction in a traveling feeling of the rider.

Other features, elements, characteristics, and advantages of the present invention will become more apparent from the following description of preferred embodiments of the present invention with reference to the attached drawings.

The inventive approach is advantageous as it eliminates the need for the limit switch used in prior art approaches and the problems associated therewith, e.g. that a relationship between a state where the clutch lever is operated and a state where the clutch is engaged may not necessarily remain constant. E.g. when a clutch disk wears, the clutch easily slides, so that the amount of backlash of the clutch changes with time. When the amount of backlash of the clutch almost becomes zero, the limit switch does not operate with the rider only lightly grasping the clutch lever, so that the clutch may be disengaged.

In such a situation the inventive approach avoids control of the output of the engine with the clutch disengaged, thereby avoiding the reduction of the traveling of the rider.

### BRIEF DESCRIPTION OF THE DRAWINGS

Fig. 1 is a schematic sectional view illustrating a motorcycle according to a preferred embodiment of the present invention;
Fig. 2 is a top view of a handle of a motorcycle;
Fig. 3 illustrates the schematic configuration of a transmission and a shifting mechanism provided within a transmission case illustrated in Fig. 1;
Fig. 4 is a schematic view illustrating a configuration in which a torque transmitted to a main shaft is transmitted to a drive shaft;
Fig. 5 is a side view illustrating the appearance of a first link mechanism and a shift pedal illustrated in Figs. 1 and 3;
Fig. 6 is a cross-sectional view illustrating the configuration of a clutch including a back torque limiter mechanism and its peripheral members;
Fig. 7 is a cross-sectional view illustrating the configuration of a clutch and its peripheral members in a case where a rider operates a clutch lever illustrated in Fig. 2;
Fig. 8 illustrates the detailed configuration of a back torque limiter mechanism including a first connection plate 450 and a second connection plate 460;
Fig. 9 is an enlarged sectional view illustrating a state where a concave-shaped portion of a first connection plate and a convex-shaped portion of a second connection plate are fitted to each other;
Fig. 10 is a cross-sectional view illustrating a clutch 3S in a case where a back torque limiter mechanism is in an operating state;
Fig. 11 illustrates an example of a change with time of an actual rotational speed and an operated rotational speed;
Fig. 12 is a flowchart illustrating an operation for setting a clutch disengagement flag;
Fig. 13 is a flowchart illustrating an operation for setting a clutch disengagement flag;
Fig. 14 is a flowchart illustrating an operation for setting a clutch disengagement flag;
Fig. 15 illustrates the relationship between a dog of a sliding gear and a dog hole of fixed gear;
Fig. 16 illustrates the schematic configuration of an engine and each part related to an output of the engine;
Fig. 17 illustrates the adjustment of an output of an engine performed by a CPU when a rider performs an up-shifting operation with the engine driving;
Fig. 18 illustrates the adjustment of an output of an engine performed by a CPU when a rider performs a down-shifting operation with the engine driven;
Fig. 19 illustrates an example of the detected value (voltage value) of a shift cam sensor in a case where the gear position is changed between a first gear position and a sixth gear position;
Fig. 20 is a flow chart illustrating an example of an operation for controlling an output of an engine by a CPU illustrated in Fig. 16;
Fig. 21 is a flow chart illustrating an example of an operation for controlling an output of an engine by a CPU illustrated in Fig. 16;
Fig. 22(a) is a graph used for setting a first period threshold value U1 and a rotational speed threshold value; and
Fig. 22(b) is a graph used for setting a second period threshold value and a rotational speed threshold value.

### DESCRIPTION OF THE PREFERRED EMBODIMENTS

A control system according to a preferred embodiment of the present invention and a saddle-straddling type vehicle including the same will now be described with reference to the drawings. A motorcycle will be described below as an example of the saddle-straddling type vehicle.

### (1) General Configuration of Motorcycle

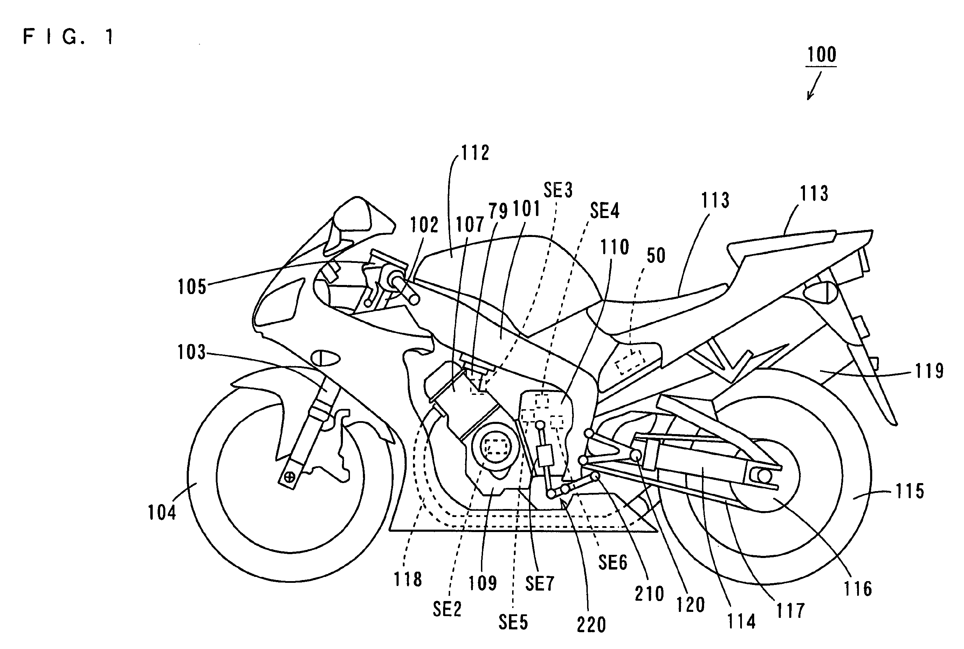

Fig. 1 is a schematic side view illustrating a motorcycle according to the present preferred embodiment.

In the motorcycle 100 illustrated in Fig. 1, a head pipe 102 is provided at a front end of a main body frame 101. A front fork 103 is provided for the head pipe 102 so as to be swingable in a right-and-left direction. A front wheel 104 is rotatably supported at a lower end of the front fork 103. A handle 105 is provided at an upper end of the head pipe 102.

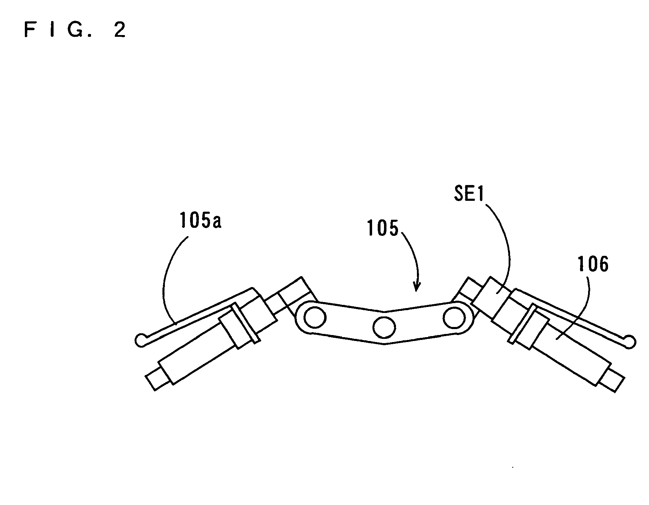

Fig. 2 is a top view of the handle 105 in the motorcycle 100. The handle 105 is provided with a clutch lever 105a, an accelerator grip 106, and an accelerator opening sensor SE1. The accelerator opening sensor SE1 detects an operation amount of the accelerator grip 106 (hereinafter referred to as "an accelerator opening") by a rider.

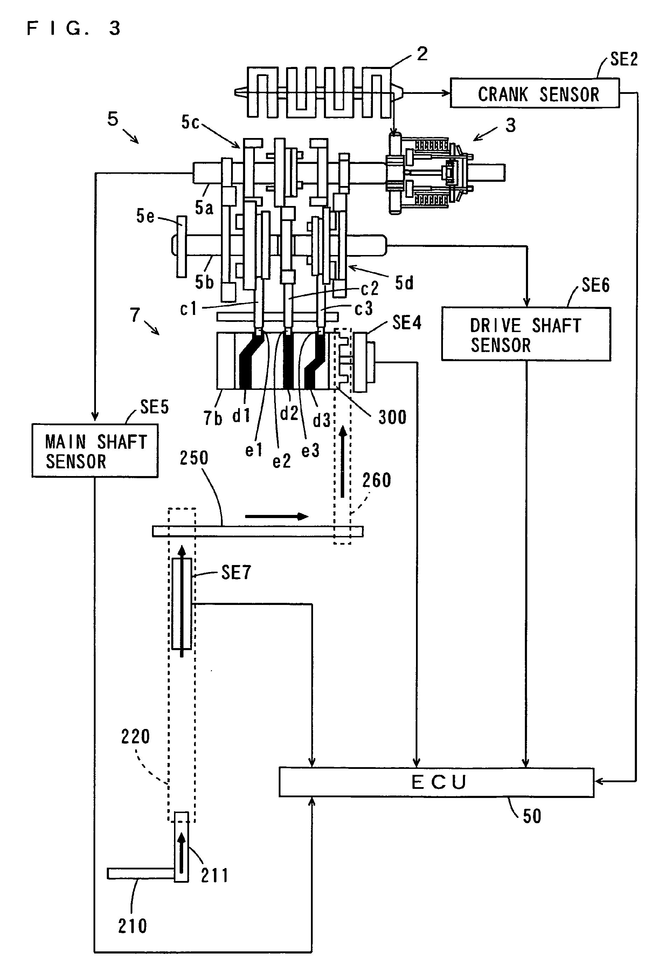

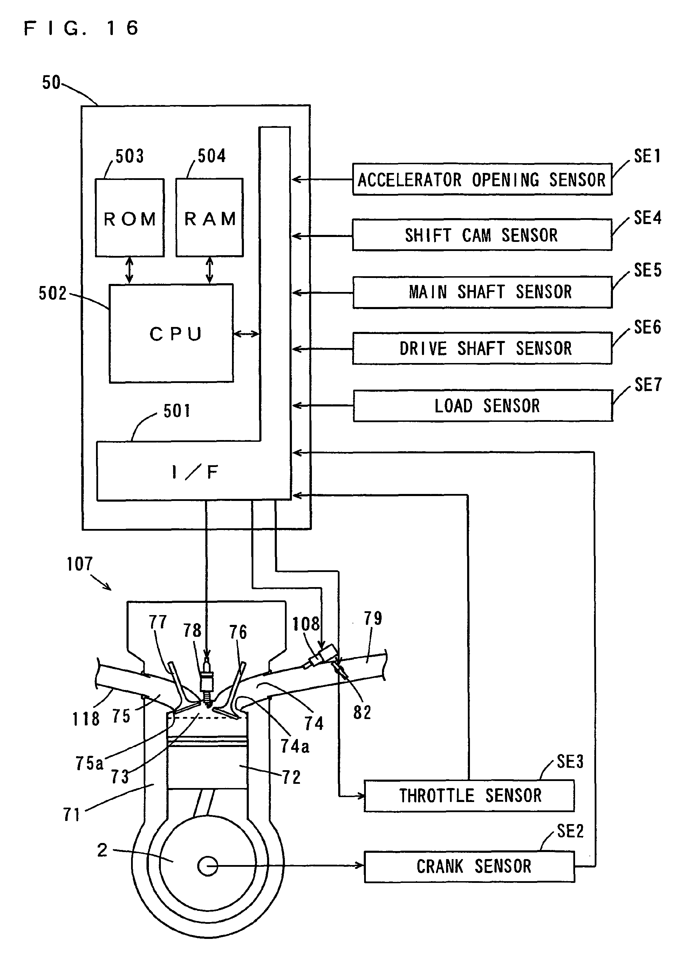

As illustrated in Fig. 1, an engine 107 is provided at the center of the main body frame 101. An intake pipe 79 and an exhaust pipe 118 are attached to the engine 107. A crankcase 109 is attached to a lower portion of the engine 107. A crank sensor SE2 is provided in the crankcase 109. The crank sensor SE2 detects the rotation angle of a crank 2 (see Figs. 3 and 16), described below, in the engine 107.

A throttle sensor SE3 is provided in the intake pipe 79. The throttle sensor SE3 detects the opening of an electronically controlled throttle valve (ETV) 82 (see Fig. 16), described below.

A transmission case 110 connected to the crankcase 109 is provided at a lower portion of the main body frame 101. A shift cam sensor SE4, a main shaft sensor SE5, and a drive shaft sensor SE6 as well as a transmission 5 (see Fig. 3) and a shifting mechanism 7 (see Fig. 3), described below, are provided in the transmission case 110.

The shift cam sensor SE4 detects the rotation angle of a shift cam 7b (see Fig. 3), described below. The main shaft sensor SE5 detects the rotational speed of a main shaft 5a (see Fig. 3), described below. The drive shaft sensor SE5 detects the rotational speed of a drive shaft 5b (see Fig. 3), described below. The details of the transmission 5 and the shifting mechanism 7 will be described below.

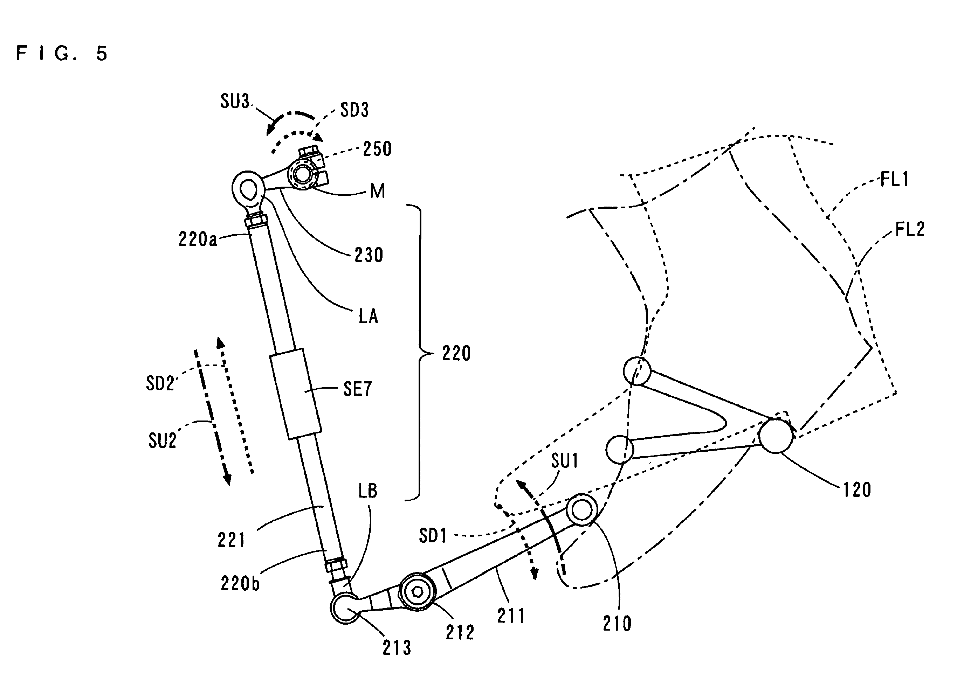

A shift pedal 210 is provided in a side portion of the transmission case 110. The shift pedal 210 is integrally attached to a pedal arm 211, described below (see Figs. 3 and 5). A back step 120 is provided behind the shift pedal 210. The back step 120 is supported by the main body frame 101.

Furthermore, a first link mechanism 220 is provided in a side portion of the transmission case 110. The first link mechanism 220 is provided with a load sensor SE7. The load sensor SE7 detects an operation of the shift pedal 210 by the rider. The details of the first link mechanism 220 and the load sensor SE7 will be described below.

A fuel tank 112 is provided above the engine 107, and two seats 113 are arranged in a front-and-rear direction behind the fuel tank 112. An electronic control unit (ECU) 50 is provided below the front seat 113.

The ECU 50 includes an interface (I/F) 501, a central processing unit (CPU) 502, a read-only memory (ROM) 503, and a random access memory (RAM) 504 (see Fig. 16), described below. The respective detected values of the sensors SE1 to SE7 are given to the CPU 502 through the I/F 501.

The CPU 502 controls the operation of the engine 107 based on the respective detected values of the sensors SE1 to SE7, as described below. The ROM 503 stores a control program for execution by the CPU 502, for example. The RAM 504 functions as a work area for the CPU 502 while storing various types of data.

A rear arm 114 is connected to the main body frame 101 so as to extend toward the rear of the engine 107 illustrated in Fig. 1. The rear arm 114 rotatably holds a rear wheel 115 and a rear wheel driven sprocket 116. A chain 117 is attached to the rear wheel driven sprocket 116.

One end of the exhaust pipe 118 is attached to an exhaust port of the engine 107. A muffler 119 is attached to the other end of the exhaust pipe 118.

### (2) Schematic Configuration of Transmission and Shifting Mechanism

Fig. 3 illustrates the schematic configuration of the transmission and the shifting mechanism provided in the transmission case 110 illustrated in Fig. 1.

As illustrated in Fig. 3, the transmission 5 includes the main shaft 5a and the drive shaft 5b. A plurality of transmission gears 5c is mounted on the main shaft 5a, and a plurality of transmission gears 5d and a rear wheel drive sprocket 5e are mounted on the drive shaft 5b. The chain 117 illustrated in Fig. 1 is attached to the rear wheel drive sprocket 5e.

A torque generated by the engine 107 illustrated in Fig. 1 is transmitted to a clutch 3 through a crank 2 illustrated in Fig. 3. The torque transmitted to the clutch 3 is transmitted to the main shaft 5a in the transmission 5. The torque transmitted to the main shaft 5a is transmitted to the drive shaft 5b through the transmission gears 5c and 5d. The torque transmitted to the drive shaft 5b is transmitted to the rear wheel 115 (Fig. 1) through the rear wheel drive sprocket 5e, the chain 117 (Fig. 1), and the rear wheel driven sprocket 116 (Fig. 1). Thus, the rear wheel 115 rotates.

When the engine 107 rotates, the rotation angle of the crank 2 detected by the crank sensor SE2 is given to the ECU 50. The rotational speed of the main shaft 5a detected by the main shaft sensor SE5 is given to the ECU 50. Furthermore, the rotational speed of the drive shaft 5b detected by the drive shaft sensor SE6 is given to the ECU 50.

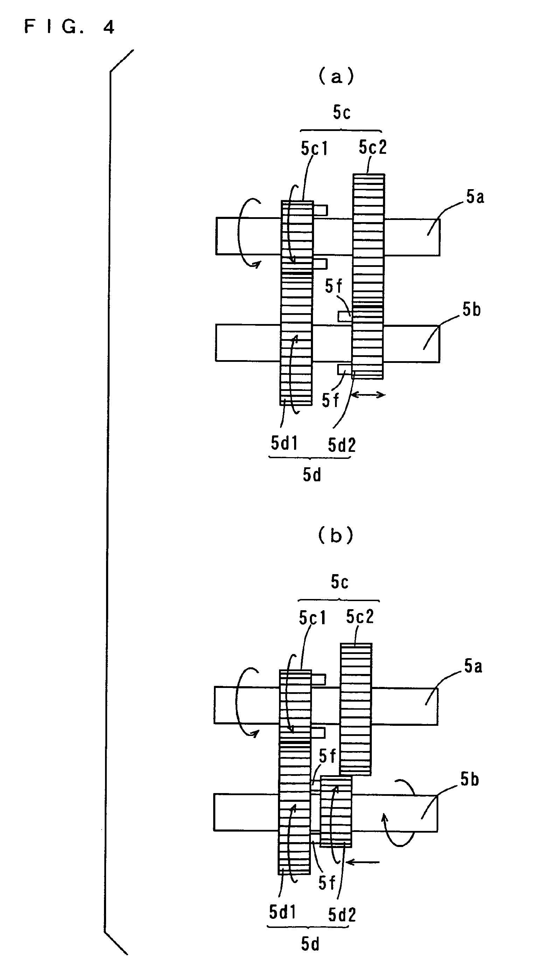

Fig. 4 is a schematic view illustrating a configuration in which the torque transmitted to the main shaft 5a is transmitted to the drive shaft 5b.

In Figs. 4(a) and 4(b), transmission gears 5c1 and 5c2 in the plurality of transmission gears 5c and transmission gears 5d1 and 5d2 in the plurality of transmission gears 5d are illustrated.

The transmission gear 5c1 is mounted on the main shaft 5a in a serration arrangement. More specifically, the transmission gear 5c1 is movable in the direction of the axis of the main shaft 5a, while being fixed to the main shaft 5a in the direction of rotation of the main shaft 5a. Therefore, the rotation of the main shaft 5a causes the transmission gear 5c1 to rotate. The transmission gear 5c2 is rotatably mounted on the main shaft 5a with the movement in the direction of the axis of the main shaft 5a inhibited.

The transmission gear 5d1 is rotatably mounted on the drive shaft 5b with the movement in the direction of the axis of the drive shaft 5b inhibited. When the transmission gear 5c1 and the transmission gear 5d1 engage with each other, the rotation of the main shaft 5a causes the transmission gear 5d1 to rotate, as illustrated in Fig. 4(a).

The transmission gear 5d2 is mounted on the drive shaft 5b in the serration arrangement. More specifically, the transmission gear 5d2 is movable in the direction of the axis of the drive shaft 5b, while being fixed to the drive shaft 5b in the direction of rotation of the drive shaft 5b. Therefore, the rotation of the transmission gear 5d2 causes the drive shaft 5b to rotate.

As illustrated in Fig. 4(a), when the transmission gear 5d2 is spaced apart from the transmission gear 5d1, the transmission gear 5d1 is not fixed to the drive shaft 5b in the direction of rotation of the drive shaft 5b. In this case, the rotation of the main shaft 5a causes the transmission gear 5d1 to rotate, while causing the drive shaft 5b not to rotate. Thus, a state where the torque is not transmitted from the main shaft 5a to the drive shaft 5b is referred to as a state where the gears are in neutral positions.

As illustrated in Fig. 4(b), the transmission gear 5d2 moves in the axial direction to come closer to the transmission gear 5d1, so that convex-shaped dogs 5f provided on a side surface of the transmission gear 5d2 engage with concave-shaped dog holes (not illustrated) provided on a side surface of the transmission gear 5d1. Thus, the transmission gears 5d1 and 5d2 are fixed to each other. In this case, the rotation of the main shaft 5a causes the transmission gear 5d2, together with the transmission gear 5d1, to rotate. Thus, the drive shaft 5b rotates.

When the transmission gear 5c1 in the state illustrated in Fig. 4(a) is brought closer to the transmission gear 5c2 to fix the transmission gear 5c1 and the transmission gear 5c2, the transmission gear 5c2, together with the transmission gear 5c1, rotates. In this case, the transmission gear 5d2 rotates based on the rotation of the transmission gear 5c2. Thus, the drive shaft 5b rotates. The transmission gears, such as the transmission gears 5c1 and 5d2, which move on the main shaft 5a or the drive shaft 5b in the direction of the axis thereof, will be hereinafter referred to as sliding gears. The transmission gears, such as the transmission gears 5c2 and 5d1, which are prevented from moving in the direction of the axis of the main shaft 5a or the drive shaft 5b, will be hereinafter referred to as fixed gears.

Thus, in the transmission 5, a transmission path of the torque from the main shaft 5a to the drive shaft 5b can be thus changed by moving the sliding gears to change a combination of the sliding gears and the fixed gears. This enables the rotational speed of the drive shaft 5b to be changed relative to the rotational speed of the main shaft 5a. The sliding gears are moved by a shifting mechanism (Fig. 3), described below.

Referring to Fig. 3 again, the shifting mechanism 7 includes a shift pedal 210, a pedal arm 211, a first link mechanism 220, a shift shaft 250, a second link mechanism 260, a stopper plate 300, a shift cam 7b, and first to third shift fork c1 to c3.

As described below, the rider depresses or kicks up the shift pedal 210 (hereinafter referred to as a shifting operation). In this case, a load applied to the shift pedal 210 by the shifting operation is transmitted to the shift shaft 250 through the pedal arm 211 and the first link mechanism 220, as indicated by a thick arrow in Fig. 3. This causes the shift shaft 250 to rotate. Furthermore, a torque transmitted to the shift shaft 250 is transmitted to the shift cam 7b through the second link mechanism 260 and the stopper plate 300.

During the shifting operation by the rider, the load transmitted from the shift pedal 210 to the first link mechanism 220 is detected by the load sensor SE7, and is given to the ECU 50. This causes the shifting operation by the rider to be detected.

First to third cam grooves d1 to d3 are formed in the shift cam 7b. The shift forks c1 to c3 are respectively connected to the first to third cam grooves d1 to d3 through pins e1 to e3. The stopper plate 300 is attached to one end of the shift cam 7b. Furthermore, the shift cam sensor SE4 is provided in close proximity to the stopper plate 300 in the vicinity of one end of the shift cam 7b. When the engine 107 rotates, the rotation angle of the shift cam 7b detected by the shift cam sensor SE4 is given to the ECU 50.

When the shift cam 7b rotates by the shifting operation, the pins e1 to e3 connected to the shift forks c1 to c3 respectively move within the cam grooves d1 to d3. This causes the shift forks c1 to c3 to move and causes the sliding gear to move. As a result, the gear ratio in the transmission 5 is changed.

### (3) Shifting Operation by Rider and Detection of Shift Load by Load Sensor

As described above, the load sensor SE7 illustrated in Fig. 3 detects a load transmitted from the shift pedal 210 to the first link mechanism 220 by the shifting operation. The details will be described. In the following description, the load transmitted to the first link mechanism 220 by the shifting operation is referred to as a shift load.

Fig. 5 is a side view illustrating the appearance of the first link mechanism 220 and the shift pedal 210 illustrated in Figs. 1 to 3.

As illustrated in Fig. 5, the shift pedal 210 is integrally attached to one end of the pedal arm 211 extending in a substantially horizontal direction. A supporting member 212 is provided in a substantially central portion of the pedal arm 211. The supporting member 212 rotatably attaches the pedal arm 211 to a supporting shaft (not illustrated) extending in a horizontal direction from the main body frame 101 (Fig. 1). The other end of the pedal arm 211 is connected as a connection end 213 to the first link mechanism 220.

The first link mechanism 220 includes a link shaft 221, a rotating piece 230, and two connection members LA and LB. A load sensor SE7 is provided in a substantially central portion of the link shaft 221. The load sensor SE7 is composed of an elastic type (strain gauge type, electrostatic capacitance type, etc.) load cell or a magnetostrictive type load cell, for example, and detects a tensile load and a compression load acting on the link shaft 221.

The connection member LA is attached to one end 220a of the link shaft 221. One end of the rotating piece 230 is rotatably connected to the connection member LA. The other end of the rotating piece 230 is mounted on the shift shaft 250 in the serration arrangement. Thus, the connection member LA moves in the direction of the axis (in an up-and-down direction) of the link shaft 221 so that the rotating piece 230 rotates around the shift shaft 250.

The connection member LB is attached to the other end 220b of the link shaft 221. The other end 220b of the link shaft 221 is connected to the connection end 213 of the pedal arm 211 through the connection member LB.

The rider depresses or kicks up the shift pedal 210 using a back step 120 as its support with his/her left foot put on the back step 120, to perform the shifting operation.

A return type transmission system is applied to the shifting mechanism 7 in this example (Fig. 3). In the shifting mechanism 7, the shift pedal 210 is kicked up, for example, so that an up-shifting operation from the first gear position to the sixth gear position is performed. The shift pedal 210 is depressed so that an up-shifting operation from the neutral gear position to the first gear position or a down-shifting operation from the sixth gear position to the first gear position is performed.

When the rider kicks up the shift pedal 210 with his/her left foot FL2, as indicated by a thick dashed-dotted arrow SU1 in Fig. 5, the pedal arm 211 rotates in a counterclockwise direction around the supporting member 212.

Thus, the connection member LB is pulled downward, as indicated by a thick dashed-dotted arrow SU2. More specifically, the other end 220b of the link shaft 221 is pulled downward.

Thus, the connection member LA is pulled downward. One end of the rotating piece 230 rotates in a counterclockwise direction around the shift shaft 250, as indicated by a thick dashed-dotted arrow SU3. In such a way, the load applied to the shift pedal 210 is transmitted to the shift shaft 250. At this time, a tensile load acts on the link shaft 221. The tensile load is detected by the load sensor SE7, and is applied to the ECU 50 illustrated in Fig. 3. In the load sensor SE7, the detected value (voltage value) of the tensile load is zero or a positive value.

On the other hand, when the rider depresses the shift pedal 210 with his/her left foot FL1, as indicated by a thick dotted arrow SD1 in Fig. 5, the pedal arm 211 rotates in a clockwise direction around the supporting member 212.

Thus, the connection member LB is pushed upward, as indicated by a thick dotted arrow SD2. More specifically, the other end 220b of the link shaft 221 is pushed upward.

Thus, the connection member LA is pushed upward. One end of the rotating piece 230 rotates in a clockwise direction around the shift shaft 250, as indicated by a thick dotted arrow SD3. In such a way, the load applied to the shift pedal 210 is transmitted to the shift shaft 250. At this time, a compressive load acts on the link shaft 221. The compressive load is detected by the load sensor SE7, and is applied to the ECU 50 illustrated in Fig. 3. In the load sensor SE7, the detected value (voltage value) of the compressive load is zero or a negative value.

As described above, the detected value of the tensile load or the compressive load detected by the load sensor SE7 is given to the ECU 50 illustrated in Fig. 3. The ECU 50 determines that the shifting operation by the rider is started when a clutch disengagement flag, described below, is in an OFF state and the absolute value of the detected value of the load sensor SE7 is a predetermined value (hereinafter referred to as a first load threshold value) or more, to start the adjustment of an output of the engine 107, described below.

The ECU 50 determines that the shifting operation by the rider is terminated when the absolute value of the detected value of the load sensor SE7 becomes not more than a predetermined value (hereinafter referred to as a second load threshold value) less than the first load threshold value.

The ECU 50 alternately determines the start and the end of the shifting operation. More specifically, the ECU 50 does not determine the start of the shifting operation unless the shifting operation is terminated when determining that the shifting operation is started once. This prevents the adjustment of the output of the engine 107, described below, from being erroneously performed a plurality of times.

### (4) Configuration and Operation of Clutch

In the motorcycle 100 according to the present preferred embodiment, the clutch 3 illustrated in Fig. 3 includes a back torque limiter mechanism.

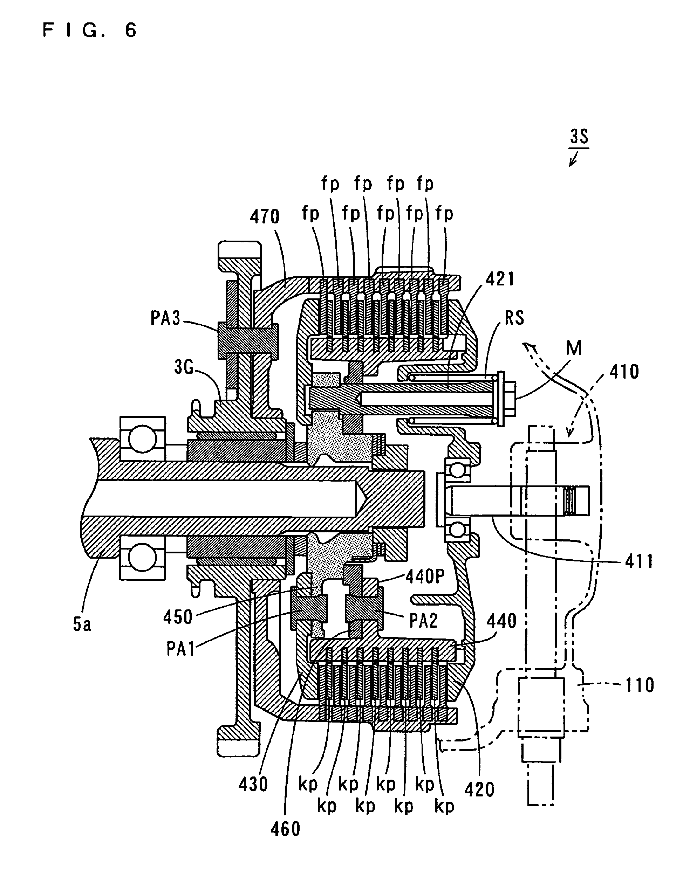

Fig. 6 is a cross-sectional view illustrating the configurations of a clutch including a back torque limiter mechanism and its peripheral members. As illustrated in Fig. 6, a clutch 3S is attached to one end of the main shaft 5a within the transmission case 110. A primary reduction gear 3G is rotatably attached to a portion of the main shaft 5a inside the clutch 3S.

The clutch 3S mainly includes a pressure plate 420, an embedded bolt 421, a boss plate 430, a clutch boss 440, a first connection plate 450, a second connection plate 460, a clutch housing 470, a plurality of clutch plates kp, a plurality of friction plate fp, a return spring RS, and first to third connection pins PA1 to PA3. The first connection plate 450 and the second connection plate 460 constitute the back torque limiter mechanism.

A clutch and declutch mechanism 410 is provided in a portion, opposed to the clutch 3S, on an inner side surface of the transmission case 110. Examples of the clutch and declutch mechanism 410 include a ball screw type or rack-and-pinion type release mechanism. One end of a pull rod 411 is connected to the clutch and declutch mechanism 410. The other end of the pull rod 411 is connected to the pressure plate 420 in the clutch 3S.

The pressure plate 420 is connected to the first connection plate 450 with the embedded bolt 421. The return spring RS is attached to the embedded bolt 421 with a screw M. This causes an elastic force produced by the return spring RS to be exerted between the pressure plate 420 and the first connection plate 450. Thus, the pressure plate 420 is pressed toward the first connection plate 450 by the return spring RS.

The first connection plate 450 is mounted on the main shaft 5a in the serration arrangement. The first connection plate 450 is connected to the boss plate 430 with the first connection pin PA1. The clutch boss 440 having a substantially cylindrical shape is provided between the pressure plate 420 and the boss plate 430.

A plurality of slits (not illustrated) is formed on an outer peripheral surface of the clutch boss 440. A plurality of clutch plates kp is fitted in the slits. The plurality of clutch plates kp is fixed to the clutch boss 440 in the direction of rotation of the clutch boss 440, and is movable with respect to the clutch boss 440 in the axial direction of the clutch boss 440.

An inner flange 440P is formed on an inner peripheral surface of the clutch boss 440. The second connection plate 460 is attached to a surface, on the side of the first connection plate 450, of the inner flange 440P with the second connection pin PA2. In this state, the second connection plate 460 is positioned between the inner flange 440P and the first connection plate 450.

The elastic force produced by the return spring RS acts on the second connection plate 460 through the pressure plate 420 and the clutch boss 440. This causes the second connection plate 460 to be pressed toward the first connection plate 450 in contact with the first connection plate 450. Thus, the second connection plate 460 is integrally connected to the first connection plate 450 except during the operation of the back torque limiter mechanism, described below.

The clutch housing 470 is provided to cover the pressure plate 420, the boss plate 430, and the clutch boss 440. A plurality of slits (not illustrated) is formed on an inner peripheral surface of the clutch housing 470. The plurality of friction plates fp is fitted in the slits. The plurality of friction plates fp is fixed to the clutch housing 470 in the direction of rotation of the clutch housing 470, and is movable with respect to the clutch housing 470 in the axial direction of the clutch housing 470.

Each of the friction plates fp is sandwiched between the adjacent clutch plates kp. More specifically, the plurality of clutch plates kp and the plurality of friction plates fp are alternately arranged.

The clutch housing 470 is connected to the first reduction gear 3G with the third connection pin PA3.

In the clutch 3S having the above-mentioned configuration, when the crank 2 illustrated in Fig. 3 rotates so that the primary reduction gear 3G rotates, the clutch housing 470 rotates. This causes the plurality of friction plates fp provided in the clutch housing 470 to also rotate.

A tensile force produced by the pull rod 411 does not act on the pressure plate 420 with the clutch lever 105a illustrated in Fig. 2 not operated by the rider.

Thus, the pressure plate 420 is pressed toward the boss plate 430 by the return spring RS, so that the friction plate fp and the clutch plate kp are brought into pressure contact with each other. As a result, a torque transmitted from the crank 2 to the primary reduction gear 3G is transmitted to the main shaft 5a through the clutch housing 470, the friction plate fp, the clutch plate kp, the clutch boss 440, the second connection plate 460, and the first connection plate 450.

In the present preferred embodiment, a state where the tensile force does not act on the pressure plate 420, and the torque is transmitted from the crank 2 to the main shaft 5a, as described above (Fig. 6), is referred to as a state where the clutch 3S is engaged.

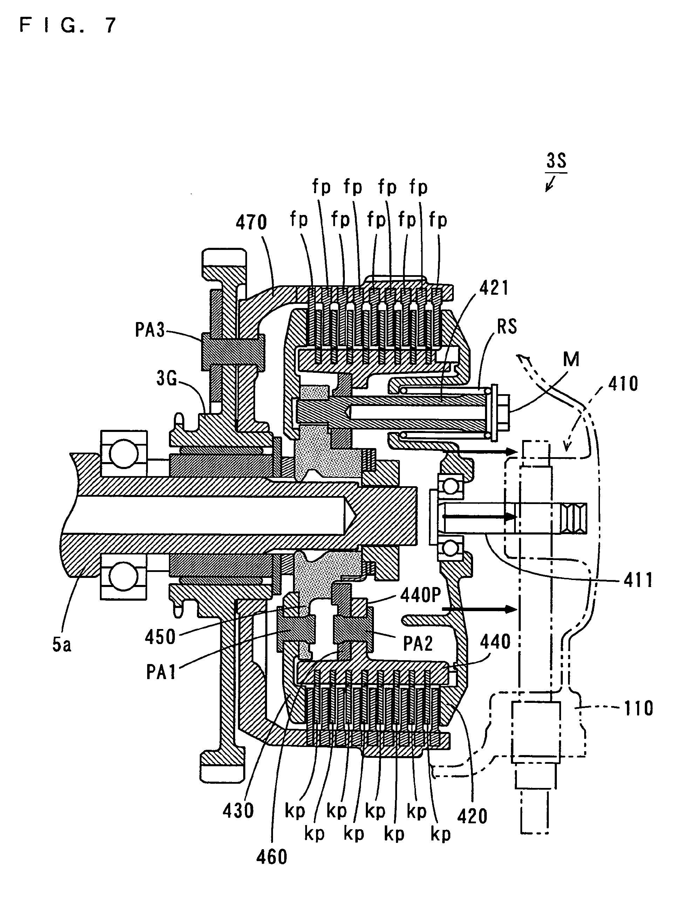

On the other hand, when the rider operates the clutch lever 105a illustrated in Fig. 2, the tensile force produced by the pull rod 411 acts on the pressure plate 420. Fig. 7 is a cross-sectional view illustrating the configuration of the clutch 3S and its peripheral members in a case where the rider operates the clutch lever 105a illustrated in Fig. 2.

In this case, the pressure plate 420 is moved toward an inner side surface of the transmission case 110 against the elastic force produced by the return spring RS, as indicated by a thick arrow in Fig. 7.

This causes a pressure contacted state between the friction plate fp and the clutch plate kp to be released. Even if the torque is transmitted from the crank 2 to the primary reduction gear 3G, therefore, the torque is not transmitted from the clutch housing 470 to the clutch boss 440. As a result, the torque is not transmitted from the crank 2 to the main shaft 5a.

In the present preferred embodiment, a state where the tensile force acts on the pressure plate 420, so that the torque is not transmitted from the crank 2 to the main shaft 5a (Fig. 7), as described above, is referred to as a state where the clutch 3S is disengaged.

In the clutch 3S, even if the rider does not operate the clutch lever 105a illustrated in Fig. 2, the pressure contacted state between the friction plate fp and the clutch plate kp may be released. This is caused by the configuration of the first connection plate 450 and the second connection plate 460.

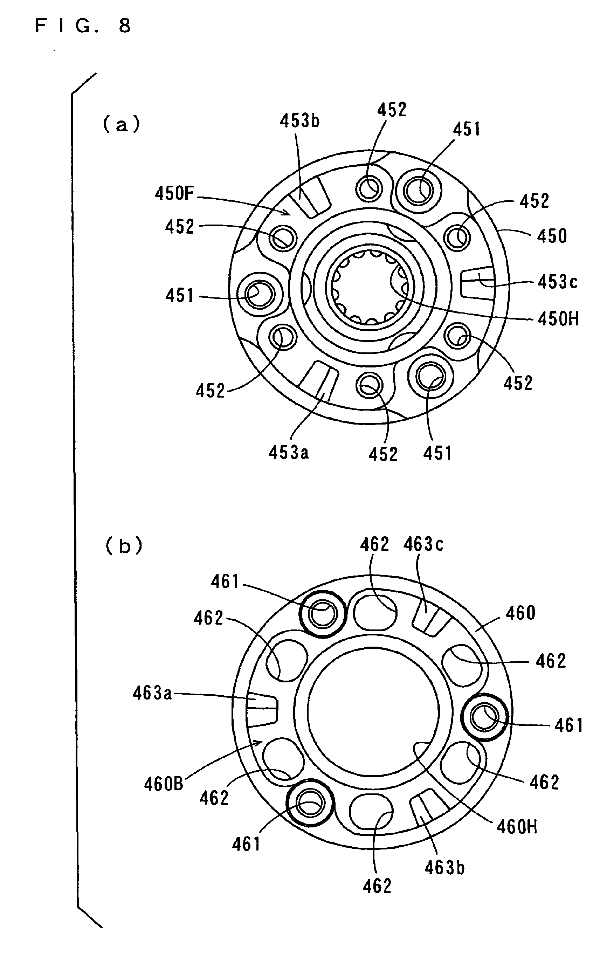

Fig. 8 illustrates the detailed configuration of the torque limiter mechanism including the first connection plate 450 and the second connection plate 460.

Fig. 8(a) illustrates a connection surface 450F of the first connection plate 450 to the second connection plate 460. A main shaft hole 450H is formed at the center of the first connection plate 450.

A plurality of (six in this example) pin holes 452 is formed on a concentric circle with the center of the first connection plate 450 as a basis. The first connection pin PA1 illustrated in Fig. 6 is inserted through the pinhole 452. This causes the first connection plate 450 and the boss plate 430 illustrated in Fig. 6 to be connected to each other.

A plurality of (three in this example) bolt holes 451 is formed on a concentric circle with the center of the first connection plate 451 as a basis. A front end of the embedded bolt 421 illustrated in Fig. 6 is screwed into the bolt hole 451. Furthermore, a plurality of (three in this example) concave-shaped portions 453a, 453b, and 453c is formed on a concentric circle with the center of the first connection plate 450 as a basis.

Fig. 8(b) illustrates a connection surface 460B of the second connection plate 460 to the first connection plate 450. A central hole 460H is formed in the second connection plate 460.

The plurality of (six in this example) pin holes 462 is formed on a concentric circle with the center of the second connection plate 460 as a basis. The second connection pin PA2 illustrated in Fig. 6 is inserted through the pin holes 462. This causes the second connection plate 460 and the inner flange 440P in the clutch boss 440 illustrated in Fig. 6 to be connected to each other.

The plurality of pin holes 462 in the second connection plate 460 is formed such that the inner diameter thereof in a circumferential direction is greater than the inner diameter thereof in a radial direction. This causes the second connection plate 460 to be slightly rotatable with respect to the inner flange 440P (Fig. 6) with the second connection plate 460 connected to the inner flange 440P.

A plurality of (three in this example) bolt holes 461 is formed on a concentric circle with the center of the second connection plate 460 as a basis. The embedded bolt 421 illustrated in Fig. 6 is inserted through the bolt hole 461. Furthermore, a plurality of (three in this example) convex-shaped portions 463a, 463b, and 463c is formed on a concentric hole with the center of the second connection plate 460 as a basis.

The first connection plate 450 illustrated in Fig. 8(a) and the second connection plate 460 illustrated in Fig. 8(b) are connected to each other by respectively fitting the concave-shaped portions 453a, 453b, and 453c of the first connection plate 450 and the convex-shaped portions 463a, 463b, and 463c of the second connection plate 460.

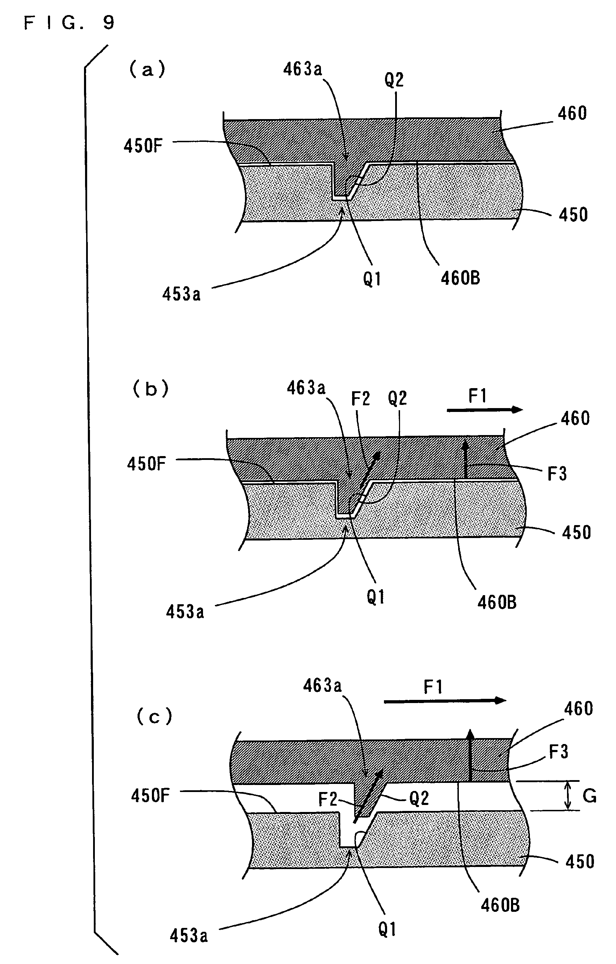

Fig. 9 is an enlarged sectional view illustrating a state where the concave-shaped portion 453a of the first connection plate 450 and the convex-shaped portion 463a of the second connection plate 460 are fitted to each other. Although the state where the concave-shaped portion 453a of the first connection plate 450 and the convex-shaped portion 463a of the second connection plate 460 are fitted to each other will be described below, the same is true for states where the concave-shaped portions 453b and 453c and the convex-shaped portions 463b and 463c are respectively fitted to each other.

As illustrated in Fig. 9(a), in the clutch 3S, the concave-shaped portion 463a of the second connection plate 460 is fitted in the convex-shaped portion 453a of the first connection plate 450.

In this state, the second connection plate 460 is pressed toward the connection surface 450F of the first connection plate 450 by the return spring RS illustrated in Figs. 6 and 7. When the second connection plate 460 rotates, therefore, the first connection plate 450, together with the second connection plate 460, also rotates.

Inclined surfaces Q1 and Q2 are respectively formed in the concave-shaped portion 453a in the first connection plate 450 and the convex-shaped portion 463a in the second connection plate 460. The convex-shaped portion 463a is fitted in the concave-shaped portion 453a so that the inclined surfaces Q1 and Q2 come into surface contact with each other.

When a torque F1 relative to the connection plate 450 is applied in one direction to the second connection plate 460, for example, as illustrated in Fig. 9(b), therefore, a force F2 to move the inclined surface Q1 of the concave-shaped portion 453a is generated in the convex-shaped portion 463a of the second connection plate 460. In this case, a force F3 acts on the second connection plate 460 in a direction away from the first connection plate 450.

When the relative torque F1 applied to the second connection plate 460 becomes significantly high, therefore, the force F3 acting on the second connection plate 460 may be greater than the elastic force produced by the return spring RS.

In this case, the convex-shaped portion 463a moves along the inclined surface Q1 of the concave-shaped portion 453a against the elastic force produced by the return spring RS, as illustrated in Fig. 9(c). Thus, the second connection plate 460 separates from the first connection plate 450 within the limit of a predetermined gap G.

The torque F1 is represented by a difference between the torque transmitted from the rear wheel 115 illustrated in Fig. 1 to the first connection plate 450 and the torque transmitted from the engine 107 illustrated in Fig. 1 to the second connection plate 460.

Even if a torque directed in an opposite direction to the above-mentioned direction is applied to the second connection plate 460, the first connection plate 450 and the second connection plate 460 do not separate from each other. The reason for this is that a surface, opposite to the inclined surface Q1, of the convex-shaped portion 453a is not provided with an inclination, and a surface, opposite to the inclination surface Q2, of the convex-shaped portion 463a is not provided with an inclination.

In the present preferred embodiment, the state where the pressure contacted state between the friction plate fp and the clutch plate kp is released without operating the clutch lever 105a illustrated in Fig. 2 by the rider, as described above, is referred to as a state where the back torque limiter mechanism operates.

When the back torque limiter mechanism operates, the torque transmitted from the crank 2 to the main shaft 5a is reduced, although the tensile force does not act on the pressure plate 420.

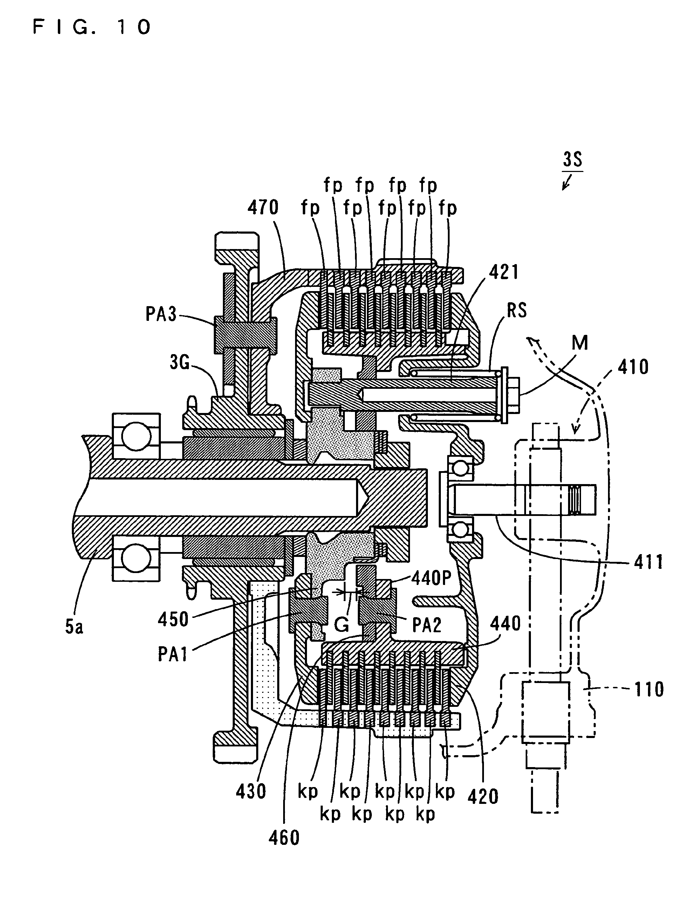

Fig. 10 is a cross-sectional view illustrating the clutch 3S with the back torque limiter mechanism operating. When the back torque limiter mechanism is in an operating state, as illustrated in Fig. 10, the first connection plate 450 and the second connection plate 460 separates from each other within the limit of a predetermined gap G.

This causes the clutch boss 440 and the pressure plate 420, together with the second connection plate 460, to move toward the inner side surface of the transmission case 110. Thus, the pressure contacted state between the friction plate fp and the clutch plate kp is released. As a result, even if the torque is transmitted from the crank 2 to the primary reduction gear 3G, the torque transmitted from the clutch housing 470 to the clutch boss 440 is sufficiently reduced.

In this example, the above-mentioned torque F1 is particularly great when generated in a case where the rider performs down-shifting by clutchless shifting or a case where an engine brake is strongly activated (e. g., a case where a gearshift over a plurality of gear positions is operated at one time), for example. Therefore, the back torque limiter mechanism enters the operating state when the rider performs down-shifting by clutchless shifting or the engine brake is strongly activated.

This causes the transmission of power between the crank 2 and the main shaft 5a to temporarily decrease, which prevents a shift shock in the motorcycle 100 from occurring and reliably inhibits the reduction in a traveling feeling.

### (5) Relationship between Actual Rotational Speed and Operated Rotational Speed

In the ECU 50 illustrated in Fig. 3, the rotational speed of the crank 2 is calculated based on the rotation angle of the crank 2 detected by the crank sensor SE2. The rotational speed of the crank 2 thus calculated based on the detected value of the crank sensor SE2 is referred to as an actual rotational speed.

In the ECU 50, the rotational speed of the crank 2 is calculated based on the rotational speed of the main shaft 5a detected by the main shaft sensor SE5. More specifically, the rotational speed of the main shaft 5a is calculated based on the detected value of the main shaft sensor SE5, and a value found by multiplying the rotational speed by the primary reduction gear ratio is calculated as the rotational speed of the crank 2. The rotational speed of the crank 2 thus calculated based on the detected value of the main shaft sensor SE5 is referred to as an operated rotational speed.

Furthermore, in the ECU 50, a clutch disengagement flag is previously set in the RAM 504 (Fig. 16). The clutch disengagement flag is a flag for determining the state of the clutch 3S (Figs. 6 to 10), and is used for allowing or inhibiting the adjustment of the output of the engine 107, described below. The ECU 50 switches the ON/OFF state of the clutch disengagement flag based on the actual rotational speed and the operated rotational speed.

In the present preferred embodiment, the ON state of the clutch disengagement flag corresponds to the disengaged state of the clutch 3S (Fig. 7). The OFF state of the clutch disengagement flag corresponds to the engaged state of the clutch 3S (Fig. 6) and the operating state of the back torque limiter mechanism (Fig. 10). As to the setting of the clutch disengagement flag, the operating state of the back torque limiter mechanism is treated in the same way as not the disengaged state of the clutch 3S but the engaged state of the clutch 3S.

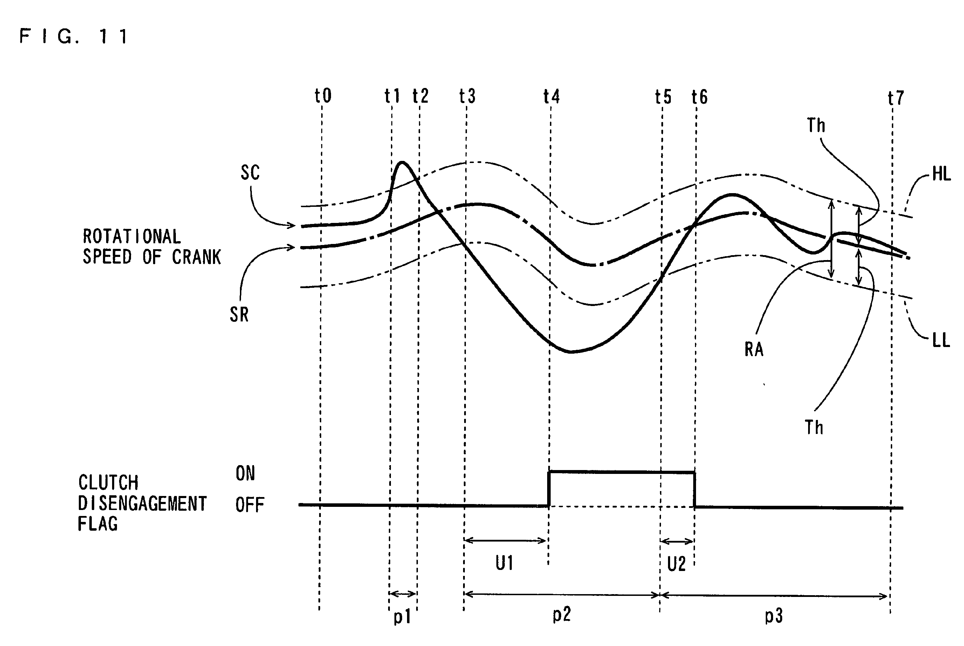

Fig. 11 illustrates an example of respective changes with time of the actual rotational speed SR and the operated rotational speed SC. Fig. 11 illustrates an example of the actual rotational speed SR and the operated rotational speed SC in its upper stage. In the upper stage of Fig. 11, the actual rotational speed SR is indicated by a thick dashed-dotted line, and the operated rotational speed SC is indicated by a thick solid line.

Fig. 11 illustrates the ON/OFF state of the clutch disengagement flag set based on the actual rotational speed SR and the operated rotational speed SC in its lower stage.

In the upper stage of Fig. 11, a rotational speed threshold value Th is previously set in the RAM 504 (Fig. 16) in the ECU 50. In the following description, a range that is not less than a value found by subtracting the rotational speed threshold value Th from the actual rotational speed SR (hereinafter referred to as an allowable range lower limit) LL nor more that a value found by adding the rotational speed threshold value Th to the actual rotational speed SR (hereinafter referred to as an allowable range upper limit) HL is referred to as a rotational speed allowable range RA.

A first period threshold value U1 is used in switching the clutch disengagement flag from the OFF state to the ON state. The first period threshold value U1 is set to 20 counts by the ECU 50, for example. In this example, when a period of time required for one count is 4 msec, a period of time corresponding to the first period threshold value U1 is 80 msec. The details of the first period threshold value U1 will be described below.

Furthermore, a second period threshold value U2 is used in switching the clutch disengagement flag from the ON state to the OFF state. The second period threshold value U2 is set to seven counts by the ECU 50, for example. In this example, when a period of time required for one count is 4 msec, a period of time corresponding to the second period threshold value U2 is 28 msec. The details of the second period threshold value U2 will be described below.

The ECU 50 determines whether or not the operated rotational speed SC is outside the rotational speed allowable range RA when the clutch disengagement flag is in the OFF state. Thus, the ECU 50 counts a period of time during which the operated rotational speed SC is outside the rotational speed allowable range RA when the actual rotational speed SR departs from the rotational speed allowable range RA. The ECU 50 switches the clutch disengagement flag from the OFF state to the ON state based on the result of the counting.

The ECU 50 determines whether or not the operated rotational speed SC is within the rotational speed allowable range RA when the clutch disengagement flag is in the ON state. Thus, the ECU 50 counts a period of time during which the operated rotational speed SC is within the rotational speed allowable range RA when the operated rotational speed SC enters the rotational speed allowable range RA. The ECU 50 switches the clutch disengagement flag from the ON state to the OFF state based on the result of the counting.

At a time point t0 illustrated in Fig. 11, the operated rotational speed SC is within the rotational speed allowable range RA. The clutch disengagement flag is in the OFF state. The time point t0 corresponds to a case where the clutch lever 105a illustrated in Fig. 2 is not operated by the rider, and the clutch 3S is in the engaged state illustrated in Fig. 6, for example.

In a period p1 between time points t1 and t2, the operated rotational speed SC is outside the rotational speed allowable range RA. More specifically, the operated rotational speed SC is greater than the allowable range upper limit HL. The ECU 50 counts a period of time elapsed from the time point t1 while the operated rotational speed SC is outside the rotational speed allowable range RA, and determines whether or not the result of the counting exceeds the first period threshold value U1.

As illustrated in Fig. 11, the ECU 50 maintains the clutch disengagement flag in the OFF state when the result of the counting does not exceed the first period threshold value U1.

The time points t1 to t2 correspond to a case where a significantly great torque difference occurs between the crank 2 and the main shaft 5a illustrated in Fig. 3 and the back torque limiter mechanism in the clutch 3S enters the operating state illustrated in Fig. 10 as a result of clutchless shifting by the rider, for example.

As described above, in the period between the time points t1 and t2, the clutch disengagement flag is maintained in the OFF state. In a period between time points t2 and t3, the operated rotational speed SC is within the rotational speed allowable range RA. Thus, the clutch disengagement flag is maintained in the OFF state. The period between the time points t2 and t3 corresponds to a case where the clutch lever 105a illustrated in Fig. 2 is not operated by the rider, and the clutch 3S is in the engaged state illustrated in Fig. 6, for example, similarly to the time point t0.

In a period p2 between time points t3 and t5, the operated rotational speed SC is outside the rotational speed allowable range RA. More specifically, the operated rotational speed SC is smaller than the allowable range lower limit LL. The ECU 50 counts a period of time elapsed from the time point t3 while the operated rotational speed SC is outside the rotational speed allowable range RA from the time point t3, and determines whether or not the result of the counting exceeds the first period threshold value U1.

At a time point t4, the ECU 50 switches the clutch disengagement flag from the OFF state to the ON state when the result of the counting exceeds the first period threshold value U1 (20 counts : 80 msec).

The time points t3 to t5 correspond to a case where the clutch lever 105a illustrated in Fig. 2 is operated by the rider, and the clutch 3S is in the disengaged state illustrated in Fig. 7, for example.

In a period between time points t4 and t5, the clutch disengagement flag is maintained in the ON state. In a period p3 between time points t5 to t7, the operated rotational speed SC is within the rotational speed allowable range RA. The ECU 50 counts a period of time elapsed from the time point t5, and determines whether or not the result of the counting exceeds the second period threshold value U2.

When the result of the counting exceeds the second period threshold value U2 at a time point t6, the ECU 50 switches the clutch disengagement flag from the ON state to the OFF state.

The time points t5 to t7 correspond to a case where the clutch lever 105a illustrated in Fig. 2 is not operated by the rider, and the clutch 3S is in the engaged state illustrated in Fig. 6, for example.

### (6) Setting Flow of Clutch Disengagement Flag

The CPU 502 (Fig. 16) performs an operation for setting the clutch disengagement flag in parallel with an operation for controlling the output of the engine 107, described below.

In the present preferred embodiment, an up-counter, a down-counter, and a connection counter are set in the control program for execution by the CPU 502.

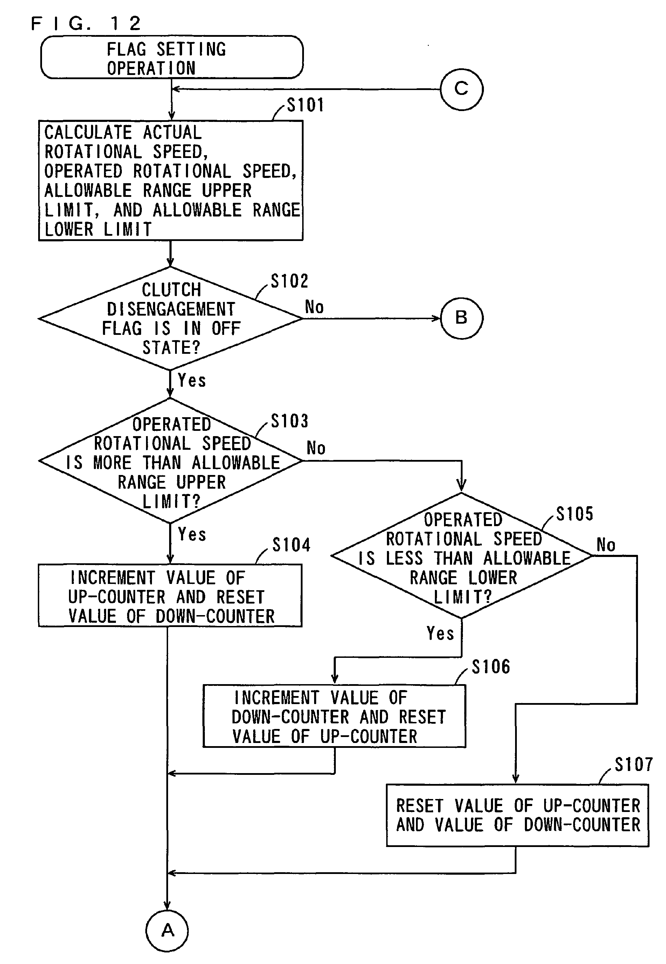

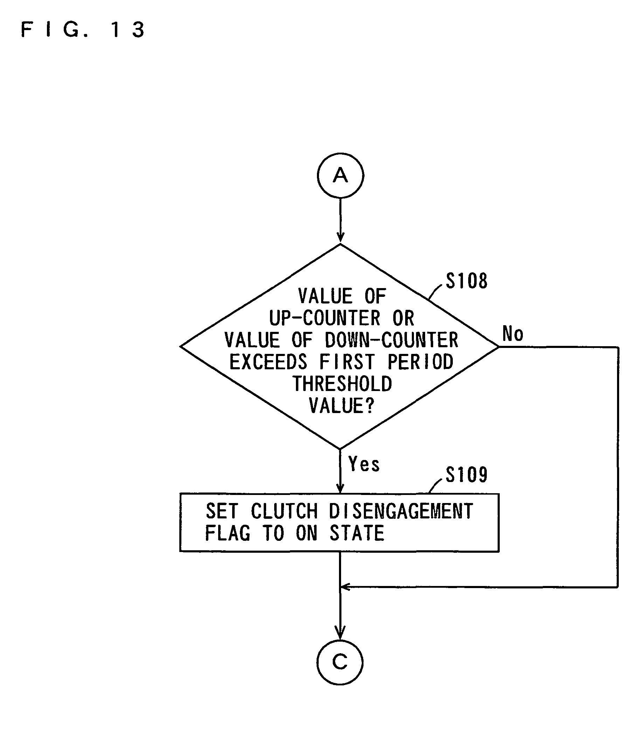

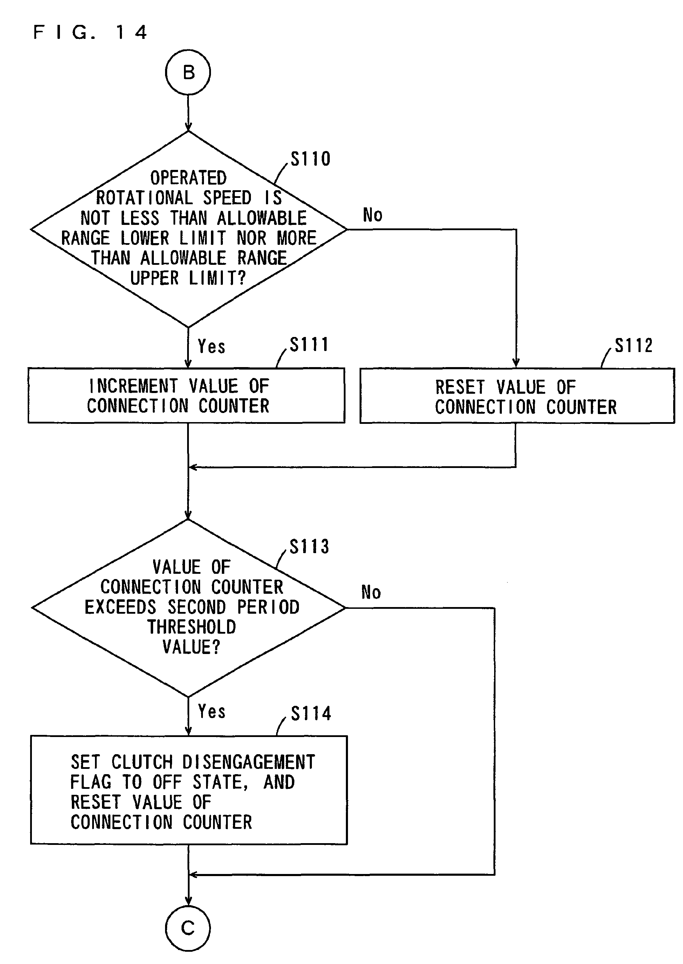

Figs. 12 to 14 are flowcharts illustrating the operation for setting the clutch disengagement flag. In an initial state, the clutch disengagement flag is in the OFF state.

In step S101, the CPU 502 first calculates the actual rotational speed SR, the operated rotational speed SC, the allowable range upper limit HL, and the allowable range lower limit LL. More specifically, the CPU 502 calculates the actual rotational speed SR based on the rotation angle of the crank 2 (Fig. 3) detected by the crank sensor SE2 (Fig. 3). The CPU 502 multiplies the rotational speed of the main shaft 5a (Fig. 3) detected by the main shaft sensor SE5 (Fig. 3) by the primary reduction gear ratio, to calculate the operated rotational speed SC. The CPU 502 adds the rotational speed threshold value Th to the actual rotational speed SR, to calculate the allowable range upper limit HL, and subtracts the rotational speed threshold value Th from the actual rotational speed SR, to calculate the allowable range lower limit LL. The actual rotational speed SR, the operated rotational speed SC, the allowable range upper limit HL, and the allowable range lower limit LL, which have been calculated, are stored in the RAM 504 (Fig. 16), for example.

In step S102, the CPU 502 then determines whether or not the clutch disengagement flag set in the RAM 504 is in the OFF state.

If the clutch disengagement flag is in the OFF state (YES in step S103), then in step S103, the CPU 502 determines whether or not the operated rotational speed SC is more than the allowable range upper limit HL.

If the operated rotational speed SC is more than the allowable range upper limit HL (YES in step S103), then in step S104, the CPU 502 increments the value of the up-counter, and resets the value of the down-counter to zero.

On the other hand, if the operated rotational speed SC is the allowable range upper limit or less (NO instep S102), then in step S105, the CPU 502 determines whether or not the operated rotational speed SC is less than the allowable range lower limit LL.

If the operated rotational speed SC is less than the allowable range lower limit LL (YES in step S105), then in step S106, the CPU 502 increments the value of the down-counter, and resets the value of the up-counter to zero.

On the other hand, if the operated rotational speed SC is the allowable range lower limit LL or more (No in step S105), then in step S107, the CPU 502 resets the value of the up-counter and the value of the down-counter to zero.

After performing the operation in any one of steps S104, S106, and S107, the CPU 502 determines whether or not the value of the up-counter or the value of the down-counter exceeds the first period threshold value U1 in step S108.

If the value of the up-counter or the value of the down-counter exceeds the first period threshold value U1 (YES in step S108), then in step S109, the CPU 502 sets the clutch disengagement flag to the ON state. Thus, the clutch disengagement flag is switched from the OFF state to the ON state. Then, the processing is returned to step S101.

On the other hand, if neither the value of the up-counter nor the value of the down-counter exceeds the first period threshold value U1 (NO in step S108), the processing is returned to step S101.

If the clutch disengagement flag is in the ON state (No in step S102), then in step S110, the CPU 502 determines whether or not the operated rotational speed SC is not less than the allowable range lower limit LL nor more than the allowable range upper limit HL.

If the operated rotational speed SC is not less than the allowable range lower limit LL nor more than the allowable range upper limit HL (YES in step S110), then in step S111, the CPU 502 increments the value of the connection counter.

On the other hand, unless the operated rotational speed SC is not less than the allowable range lower limit LL nor more than the allowable range upper limit HL (NO in step S110), the CPU 502 resets the value of the connection counter in step S112.

After performing the operation in either one of steps S111 and S112, the CPU 502 determines whether or not the value of the connection counter exceeds the second period threshold value U2 in step S113.

If the value of the connection counter exceeds the second period threshold value U2 (YES in step S113), then in step S114, the CPU 502 sets the clutch disengagement flag to the OFF state, and resets the value of the connection counter to zero. Thus, the clutch disengagement flag is switched from the ON state to the OFF state. Then, the processing is returned to step S101.

On the other hand, if the value of the connection counter does not exceed the second period threshold value U2 (NO in step S113), the processing is returned to step S101.

In the present preferred embodiment, the processing in step S101 is repeated for each 4 msec, for example.

### (7) Control of Output of Engine

As illustrated in Fig. 4, the convex-shaped dogs 5f are formed on each of the sliding gears (transmission gears 5c1 and 5d2) in the plurality of transmission gears 5c and the plurality of transmission gears 5d, and the concave-shaped dog holes, which engages with the dogs 5f, are formed on each of the fixed gears (transmission gears 5c2 and 5d1) in the plurality of transmission gears 5c and the plurality of transmission gears 5d.

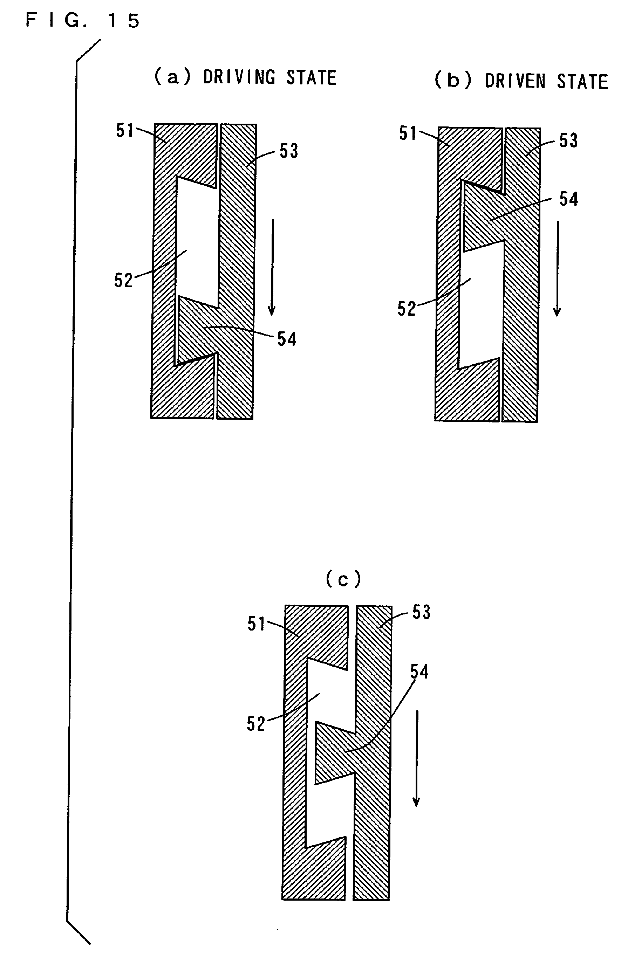

Fig. 15 illustrates the relationship between the dog of the sliding gear and the dog hole of the fixed gear. Fig. 15 schematically illustrates a cross section of a portion where the dog of the sliding gear and the dog hole of the fixed gear are formed. It is assumed that the portion illustrated in Fig. 15 of the sliding gear and the fixed gear moves (rotates) in a direction indicated by an arrow.

Fig. 15(a) illustrates a case where a torque is applied from the crank 2 (Fig. 3) to the main shaft 5a (Fig. 3), and Fig. 15(b) illustrates a case where a torque is applied from the main shaft 5a to the crank 2.

Hereinafter, the case where the torque is applied from the crank 2 to the main shaft 5a (the state illustrated in Fig. 15(a)) is referred to as a driving state of the engine 107, and the opposite case (the state illustrated in Fig. 4(b)) is referred to as a driven state of the engine 107. For example, the engine 107 enters the driving state when the motorcycle 100 is accelerated, while entering the driven state when the motorcycle 100 is decelerated. More specifically, the driven state of the engine 107 is a state where the engine brake is applied.

As illustrated in Fig. 15, a dog hole 52, having a trapezoidal shape in cross section, whose width increases toward its bottom surface is formed on a fixed gear 51. A dog 54, having an inverted trapezoidal shape in cross section, whose width increases toward its tip end is formed on a sliding gear 53.

In the driving state of the engine 107, a front side surface of the dog 54 in the movement direction thereof abuts on a front side surface of the dog hole 52 in the movement direction thereof, as illustrated in Fig. 15(a). Thus, a torque generated by the sliding gear 53 is transmitted to the fixed gear 51 through the dog 54. In this case, a large pressure (engagement force) is generated on a contact surface of the dog hole 52 and the dog 54. Therefore, it is difficult to move the sliding gear 53 in a direction away from the fixed gear 51.

In the driven state of the engine 107, a rear side surface of the dog 54 in the movement direction thereof abuts on a rear side surface of the dog hole 52 in the movement direction thereof, as illustrated in Fig. 15(b). Thus, a torque generated by the fixed gear 51 is transmitted to the sliding gear 53 through the dog 54. As described above, the engine brake is applied in the driven state of the engine 107. Therefore, the rotation of the fixed gear 51 is regulated by the sliding gear 53. In this case, a force (engagement force) is generated on the contact surface of the dog hole 52 and the dog 54. Therefore, it is difficult to move the sliding gear 53 in the direction away from the fixed gear 51.

In the present preferred embodiment, the CPU 502 in the ECU 50 (Fig. 16) adjusts the output of the engine 107 based on the detected values of the sensors SE1 to SE7.

Thus, the engagement between the dog hole 52 and the dog 54 can be released without bringing the clutch 3S into the disengaged state (Fig. 7). More specifically, the fixed gear 51 and the sliding gear 53 can be brought into the state illustrated in Fig. 15(c).

This enables the sliding gear 53 to move in the direction away from the fixed gear 51. As a result, the rider can operate a gearshift smoothly without bringing the clutch 3 into the disengaged state (Fig. 7). More specifically, clutchless shifting can be performed smoothly. The details thereof will be described below.

### (7-1) Relationship Between Engine and Each Part

Fig. 16 illustrates the schematic configuration of the engine 107 and each part related to the output of the engine 107.

As illustrated in Fig. 16, the engine 107 includes a cylinder 71. In the cylinder 71, a piston 72 is provided so as to be movable up and down. A combustion chamber 73 is formed in an upper portion of the cylinder 71. The combustion chamber 73 communicates with the outside of the engine 107 through an intake port 74 and an exhaust port 75.

An intake valve 76 is provided at an open end 74a on the downstream side of the intake port 74 so as to be able to be opened and closed, and an exhaust valve 77 is provided at an open end 75a on the upstream side of the exhaust port 75. The intake valve 76 and the exhaust valve 77 are driven by a normal cam mechanism. Above the combustion chamber 73, an ignition plug 78 is provided to perform spark ignition in the combustion chamber 73.

An intake pipe 79 and an exhaust pipe 118 are attached to the engine 107 so as to respectively communicate with the intake port 74 and the exhaust port 75. The intake pipe 79 is provided with an injector 108 for feeding a fuel into the cylinder 71. The ETV 82 is provided within the intake pipe 79.

During actuation of the engine 107, air is sucked into the combustion chamber 73 from the intake port 74 through the intake pipe 79 while the fuel is fed into the combustion chamber 73 by the injector 108. Thus, an air-fuel mixture is produced within the combustion chamber 73. The ignition plug 78 performs the spark ignition of the air-fuel mixture. Burned gas produced by the combustion of the air-fuel mixture in the combustion chamber 73 is exhausted from the exhaust port 75 through the exhaust pipe 118.

The detected values of the accelerator opening sensor SE1, the crank sensor SE2, the throttle sensor SE3, the shift cam sensor SE4, the main shaft sensor SE5, the drive shaft sensor SE6, and the load sensor SE6 are given to the ECU 50.

### (7-2) Control Operation by CPU

### (7-2-a) Outline

In the present preferred embodiment, the CPU 502 in the ECU 50 adjusts the throttle opening of the ETV 82 based on the detected value of the accelerator opening sensor SE1 during a normal operation. Thus, the output of the engine 107 is adjusted to be a value corresponding to the accelerator opening. The relationship between the accelerator opening and the throttle opening (the output of the engine) can be stored in the ROM 503 or the RAM 504 illustrated in Fig. 16.

The CPU 502 detects the shifting operation performed by the rider based on the detected value of the load sensor SE7. The CPU 502 determines whether or not the output of the engine 107 is adjusted based on the state of the clutch disengagement flag when detecting the shifting operation by the rider. When the output of the engine 107 is adjusted, therefore, an engagement force exerted between the fixed gear 51 (Fig. 15) and the sliding gear 53 (Fig. 15) is reduced, so that the rider can easily perform clutchless shifting (a gearshift).

Furthermore, the CPU 502 determines whether or not the gearshift is completed based on the detected value of the shift cam sensor SE4 while determining whether or not the shifting operation by the rider is terminated based on the detected value of the load sensor SE7. When the gearshift is completed and the shifting operation is terminated, the CPU 502 terminates the adjustment of the output of the engine 107, to control the engine 107 during a normal operation.

The CPU 502 reduces the output or the engine 107 by stopping the spark ignition of the air-fuel mixture by the ignition plug 78 (Fig. 16), retarding ignition timing, or decreasing the throttle opening of the ETV 82 (Fig. 16), for example. The CPU 502 increases the output of the engine 107 by increasing the throttle opening of the ETV 82, for example.

### (7-2-b) Adjustment of Output of Engine

The adjustment of the output of the engine 107 by the CPU 502 will be described with reference to the drawings.

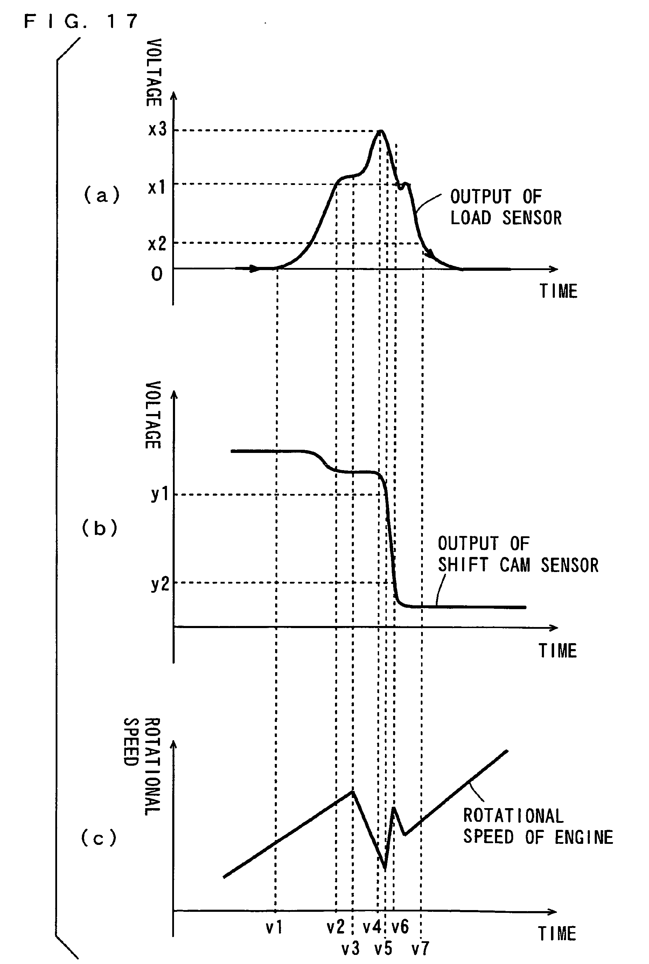

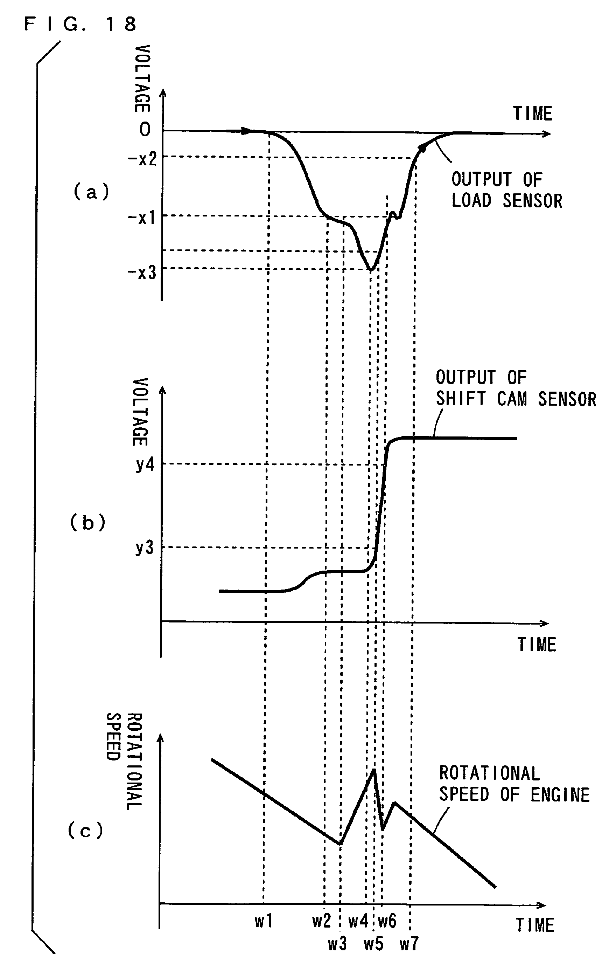

Fig. 17 illustrates the adjustment of the output of the engine 107 by the CPU 502 when the rider performs the up-shifting operation with the engine 107 driving. Fig. 18 illustrates the adjustment of the output of the engine 107 by the CPU 502 when the rider performs the down-shifting operation with the engine 107 driven.

Fig. 17(a) and Fig. 18(a) illustrate output waveforms (detected values) of the load sensor SE7, and Fig. 17(b) and Fig. 18(b) illustrate output waveforms (detected values) of the shift cam sensor SE4. Figs. 17(a) and 17(b) and Figs. 18(a) and 18(b) plot voltage as the ordinate and time as the abscissa. Fig. 17(c) and Fig. 18(c) illustrate changes in the rotational speed of the engine 107. Fig. 17(c) and Fig. 18(c) plot rotational speed as the ordinate and time as the abscissa.

Fig. 17 will be first described. When the engine 107 is in the driving state, the rotational speed of the engine 107 increases with an elapse of time, as illustrated in Fig. 17(c). In the example illustrated in Fig. 17, the rider starts the up-shifting operation at a time point v1 within a period during which the rotational speed of the engine 107 increases.

The detected value (voltage value) of the load sensor SE7 increases in accordance with the increase in the operation amount of the shift pedal 210 (Fig. 3) by the rider, as illustrated in Fig. 17(a). The detected value of the load sensor SE7 becomes a maximum value x3 at a time point v4 immediately before the engagement of the fixed gear 51 (Fig. 15) with the sliding gear 53 (Fig. 15) is released.

The engagement of the fixed gear 51 with the sliding gear 53 is released so that the rider finishes kicking up the shift pedal 210. Thus, the detected value of the load sensor SE7 decreases from the maximum value x3 to zero, as illustrated in Fig. 17(a).

The detected value (voltage value) of the shift cam sensor SE4 gradually decreases in accordance with the increase in the operation amount of the shift pedal 210 by the rider, as illustrated in Fig. 17(b), and rapidly decreases due to the release of the engagement of the fixed gear 51 with the sliding gear 53.

Deflection and backlash exist in a connection mechanism for connecting the shift pedal 210 and the shift cam 7b (Fig. 3). Therefore, the respective detected values of the load sensor SE7 and the shift cam sensor SE4 unstably vary between time points v1 and v4.

In this example, the adjustment of the output of the engine 107 is started at a time point v3 elapsed by a predetermined period from a time point v2 where the detected value (voltage value) of the load sensor SE7 reaches a first load threshold value x1, and the output of the engine 107 is reduced. As described above, the decrease in the output of the engine 107 is realized by stopping the spark ignition of the air-fuel mixture by the ignition plug 78 (Fig. 16), for example.

Thus, the rotational speed of the engine 107 decreases at the time constant v3, as illustrated in Fig. 17(c), so that an engagement force on the contact surface of the dog hole 52 (Fig. 15) of the fixed gear 51 (Fig. 15) and the dog 54 (Fig. 15) of the sliding gear 53 (Fig. 15) is reduced. As a result, the fixed gear 51 and the sliding gear 53 are changed from an engaging state illustrated in Fig. 15(a) to an engagement released state illustrated in Fig. 15(c). This enables the sliding gear 53 to easily move in the direction away from the fixed gear 51, so that the rider can operate a gearshift without bringing the clutch 3S into the disengaged state (Fig. 7).

As described above, the engagement releasing operation of the dog hole 52 and the dog 54 is started when the detected value of the load sensor SE7 reaches the first load threshold value x1 in the example illustrated in Fig. 17(a). Therefore, in this example, the adjustment of the output of the engine 107 is started after an elapse of a predetermined period since the engagement releasing operation of the dog hole 52 and the dog 54 was started.

The adjustment of the output of the engine 107 is terminated at a time point v5 where the engagement of the fixed gear 51 with the sliding gear 53 is released and the detected value of the shift cam sensor SE4 (Fig. 17(b)) becomes a value y1.

Thus, the rotational speed of the engine 107 increases again, as illustrated in Fig. 17(c). Then, at a time point v6, the fixed gear 51 and the sliding gear 53 engage with each other (the engaging state illustrated in Fig. 15(a)), so that the gearshift is completed. This results in completion of the up-shifting operation in the transmission 5 (Fig. 3). At the time point v6, the detected value of the shift cam sensor SE4 (Fig. 17(b)) becomes a value y2.

It is determined that the shifting operation by the rider is terminated when the detected value of the load sensor SE7 becomes a second load threshold value x2 or less. Therefore, in this example, the subsequent adjustment of the output of the engine 107 can be performed at a time point v7 or later where the detected value of the load sensor SE7 becomes the second load threshold value x2 or less.

Fig. 18 will be then described. When the engine 107 is in the driven state, the rotational speed of the engine 107 decreases with an elapse of time, as illustrated in Fig. 18(c). In the example illustrated in Fig. 18, the rider starts the down-shifting operation at a time point w1 within a period during which the rotational speed of the engine 107 decreases.

The detected value (voltage value) of the load sensor SE7 decreases in accordance with the increase in the operation amount of the shift pedal 210 (Fig. 3) by the rider, as illustrated in Fig. 18(a). The detected value of the load sensor SE7 becomes a minimum value - x3 at a time point w4 immediately before the engagement of the fixed gear 51 (Fig. 15) with the sliding gear 53 (Fig. 15) is released.

The engagement of the fixed gear 51 with the sliding gear 53 is released so that the rider finishes depressing the shift pedal 210. Thus, the detected value of the load sensor SE7 increases from the minimum value - x3 to zero, as illustrated in Fig. 18(a).

The detected value (voltage value) of the shift cam sensor SE4 gradually increases in accordance with the increase in the operation amount of the shift pedal 210 by the rider, as illustrated in Fig. 18(b), and rapidly increases due to the release of the engagement of the fixed gear 51 with the sliding gear 53.

As described above, deflection and backlash exist in a connection mechanism for connecting the shift pedal 210 and the shift cam 7b (Fig. 3). Therefore, the detected values of the load sensor SE7 and the shift cam sensor SE4 unstably vary between time points w1 and w4.

In this example, the adjustment of the output of the engine 107 is started at a time point w3 elapsed by a predetermined period from a time point w2 where the detected value (voltage value) of the load sensor SE7 reaches a value - x1, and the output of the engine 107 is increased. As described above, the increase in the output of the engine 107 is realized by increasing the throttle opening of the ETV 82 (Fig. 16), for example.

Thus, the rotational speed of the engine 107 increases at the time point w3, as illustrated in Fig. 18(c), so that an engagement force on the contact surface of the dog hole 52 (Fig. 15) of the fixed gear 51 (Fig. 15) and the dog 54 (Fig. 15) of the sliding gear 53 (Fig. 15) is reduced. As a result, the fixed gear 51 and the sliding gear 53 are changed from the engaging state illustrated in Fig. 15(b) to the engagement released state illustrated in Fig. 15(c). This enables the sliding gear 53 to easily move in the direction away from the fixed gear 51, so that the rider can operate a gearshift without bringing the clutch 3 into the disengaged state (Fig. 7).

As described above, the engagement releasing operation of the dog hole 52 and the dog 54 is started when the detected value of the load sensor SE7 reaches the value - x1 in the example illustrated in Fig. 18(a). Therefore, in this example, the adjustment of the output of the engine 107 is started after an elapse of a predetermined period since the engagement releasing operation of the dog hole 52 and the dog 54 was started.

The adjustment of the output of the engine 107 is terminated at a time point w5 where the engagement of the fixed gear 51 with the sliding gear 53 is released and the detected value of the shift cam sensor SE4 (Fig. 18(b)) becomes a value y3.

Thus, the rotational speed of the engine 107 decreases again, as illustrated in Fig. 18(c). Then, at a time point w6, the fixed gear 51 and the sliding gear 53 engage with each other (the engaging state illustrated in Fig. 15(b)), so that the gearshift is completed. This results in completion of the up-shifting operation in the transmission 5 (Fig. 3). At the time point w6, the detected value of the shift cam sensor SE4 (Fig. 18(b)) becomes a value y4.

It is determined that the shifting operation by the rider is terminated when the detected value of the load sensor SE7 becomes a value - x2 or more. Therefore, in this example, the subsequent adjustment of the output of the engine 107 can be performed after a time point w7 or later where the detected value of the load sensor SE7 becomes the value - x2 or more.

In Fig. 18(a), the absolute value of the value - x1 is equal to the first load threshold value x1, and the absolute value of the value - x2 is equal to the second load threshold value x2.

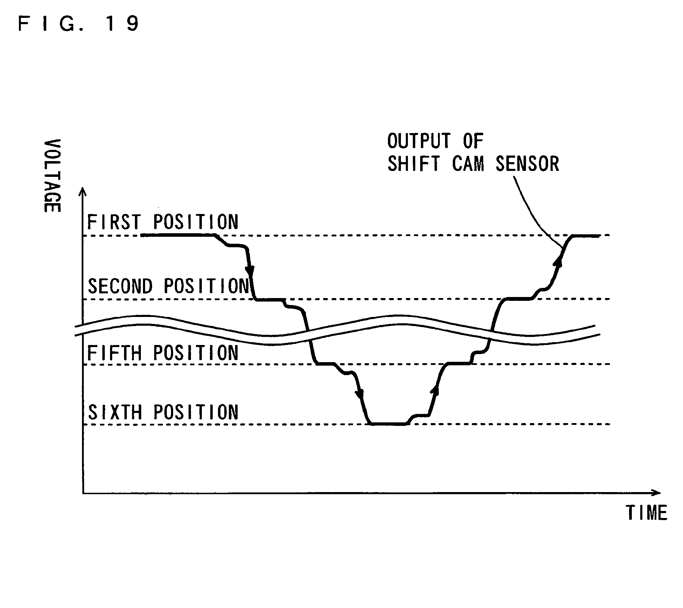

The detected value of the shift cam sensor SE4 differs depending on the gear position. Fig. 19 illustrates an example of the detected value (voltage value) of the shift cam sensor SE4 when the gear position is changed between the first gear position and the sixth gear position. Fig. 19 plots voltage as the ordinate and time as the abscissa.

As illustrated in Fig. 19, the detected value of the shift cam sensor SE4 is high when the gear position is low, and decreases as the gear position increases. In the present preferred embodiment, the value of the shift cam sensor SE4 corresponding to each of the gear positions is stored in the ROM 503 (Fig. 16). The CPU 502 (Fig. 16) controls the output of the engine 107 based on the value, corresponding to each of the gear positions, of the shift cam sensor SE4 stored in the ROM 503.

### (7-2-c) Control Flow

The control operation by the CPU 502 will be then described.

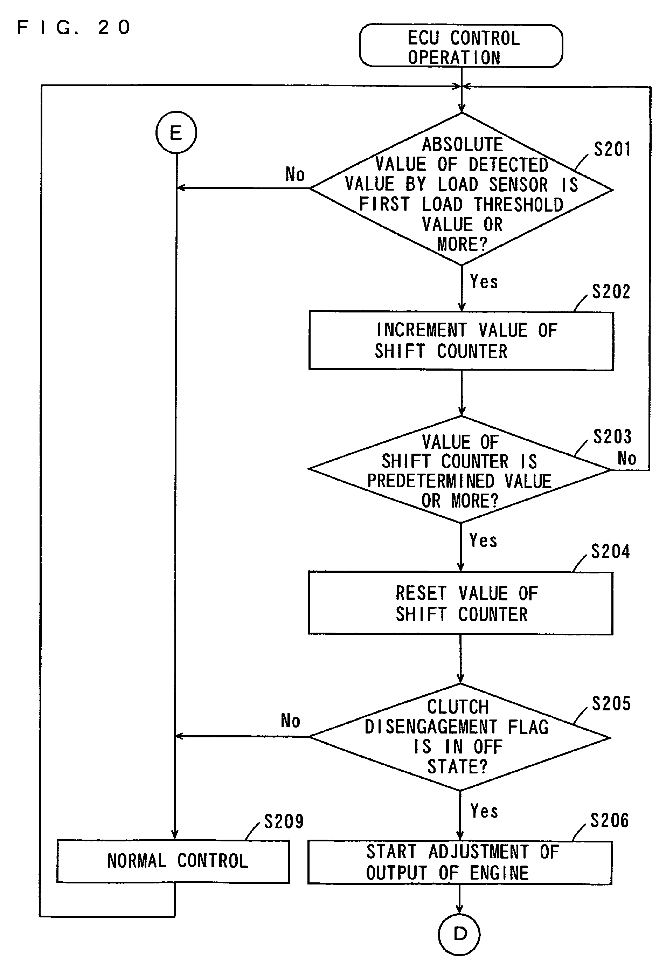

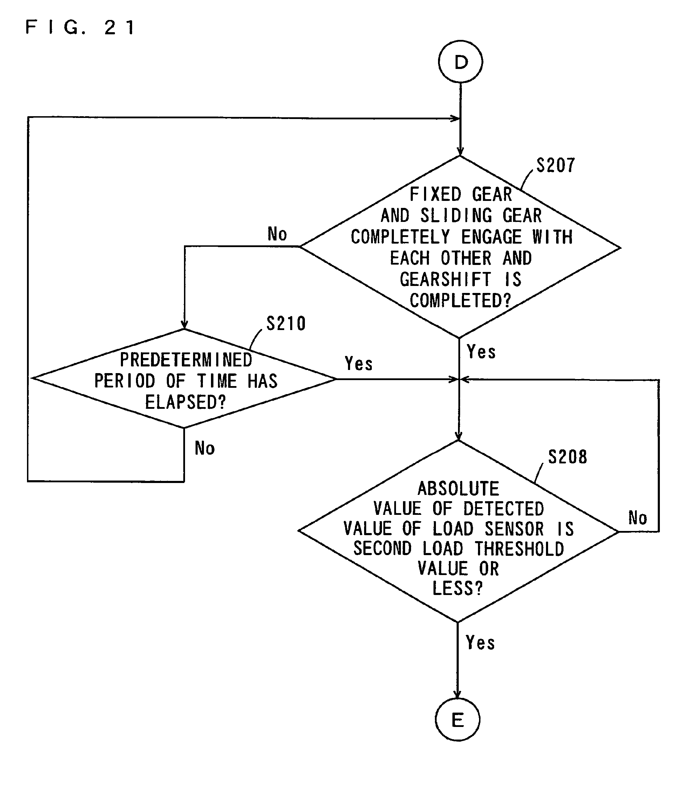

Figs. 20 and 21 are flow charts illustrating an example of the operation for controlling the output of the engine 107 by the CPU 502 illustrated in Fig. 16. As described above, the CPU 502 performs the above-mentioned flag setting operation in parallel with the operation for controlling the output of the engine 107, described below.

A shift counter is set in addition to the above-mentioned three counters (up-counter, down-counter, and connection counter) in the control program for execution by the CPU 502.

In step S201, the CPU 502 first determines whether or not the absolute value of the detected value (voltage value) of the load sensor SE7 is the first load threshold value x1 or more.

If the absolute value of the detected value of the load sensor SE7 is the first load threshold value x1 or more (YES in step S201), the CPU 502 increments the value of the shift counter in step S202, and determines whether or not the value of the shift counter is a predetermined value or more in step S203.

If the value of the shift counter is the predetermined value or more (YES in step S203), the CPU 502 resets the value of the shift counter to zero in step S204, and determines whether or not the clutch disengagement flag is in the OFF state in step S205.

If the clutch disengagement flag is in the OFF state (YES in step S205), then in step S206, the CPU 502 starts the adjustment of the output of the engine, described above.

In step S207, the CPU 502 then determines whether or not the fixed gear 51 and the sliding gear 53 completely engage with each other and the gearshift is completed based on the detected value of the shift cam sensor SE4.

The determining operation is realized by storing the values y2 and y4 of the shift cam sensor SE4 described with reference to Figs. 17 and 18, for example, in the RAM 504 illustrated in Fig. 16.

If the fixed gear 51 and the sliding gear 53 completely engage with each other and the gearshift is completed (YES in step S207), then in step S208, the CPU 502 determines whether or not the absolute value of the detected value of the load sensor SE7 is the second load threshold value x2 or less.

If the absolute value of the detected value of the load sensor SE7 is the second load threshold value x2 or less (YES in step S208), then in step S209, the CPU 502 carries out normal control. After the processing in step S209, the processing is returned to step S201 again.

In the normal control in step S209, the CPU 502 adjusts the throttle opening of the ETV 82 (Fig. 16) based on the detected value of the accelerator opening sensor SE1, as described above. Therefore, the output of the engine 107 is adjusted depending on the operation amount of the accelerator grip 106 (Fig. 2) by the rider in the normal control.

If the absolute value of the detected value of the load sensor SE7 is not the first load threshold value x1 or more (NO in step S201), the processing proceeds to step S209.

If the value of the shift counter is not the predetermined value or more (NO in step S203), the processing is returned to step S201.

If the clutch disengagement flag is not in the OFF state (NO in step S205), the processing proceeds to step S209.

If the fixed gear 51 and the sliding gear 53 do not completely engage with each other and the gearshift is not completed (NO in step S207), then in step S210, the CPU 502 determines whether or not a predetermined period of time has elapsed.

If the predetermined period of time has not elapsed (NO in step S210), the processing is returned to step S207. On the other hand, if the predetermined period of time has elapsed (YES in step S21 0), the processing proceeds to step S208.

If the absolute value of the detected value of the load sensor SE7 is not the second load threshold value x2 or less (NO in step S208), the CPU 502 waits until the absolute value of the detected value of the load sensor SE7 becomes the second load threshold value x2 or less.

### (8) Setting of Various Threshold Values Used for Flag Setting Operation

### (8-1) First Period Threshold Value and Rotational Speed Threshold Value

As described above, when the clutch disengagement flag is switched from the OFF state to the ON state, a first period threshold value U1 and a rotational speed threshold value Th are used.

The first period threshold value U1 and the rotational speed threshold value Th are set in consideration of the following points.

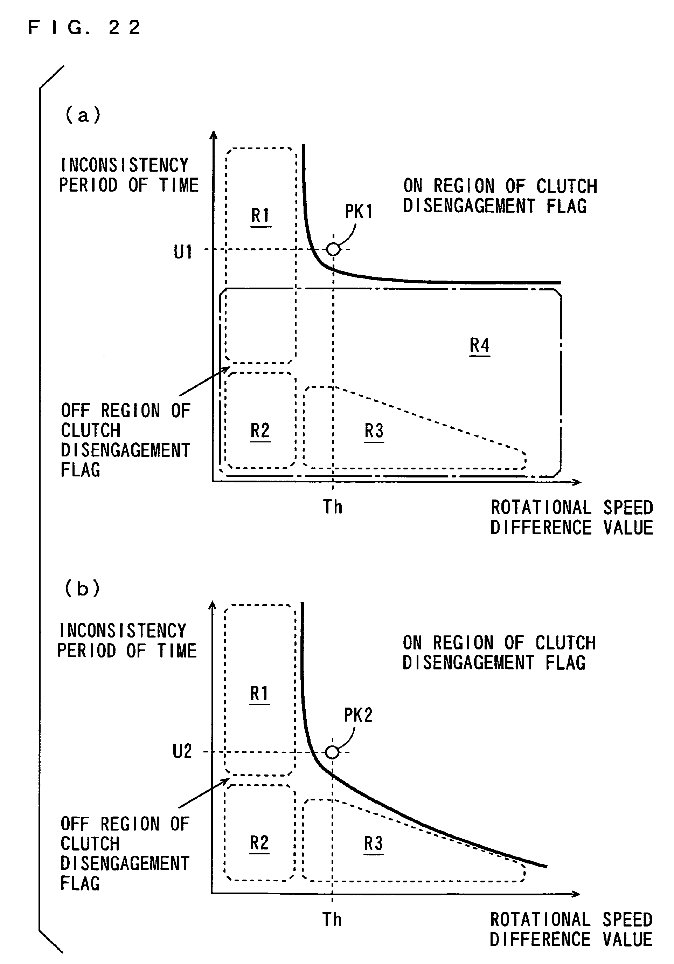

Fig. 22(a) is a graph used for setting the first period threshold value U1 and the rotational speed threshold value Th. In this graph, the ordinate represents an elapsed period of time of a state where the actual rotational speed SR and the operated rotational speed SC do not coincide with each other (hereinafter referred to as an inconsistency period of time), and the abscissa represents the absolute value of a difference value between the actual rotational speed SR and the operated rotational speed SC (hereinafter referred to as a rotational speed difference value).

In Fig. 22(a), the above-mentioned clutch 3S is theoretically in the engaged state (Fig. 6) when the inconsistency period of time and the rotational speed difference value are zero, while being in the disengaged state (Fig. 7) when neither the inconsistency period of time nor the rotational speed difference value is zero.

Even when neither the inconsistency period of time nor the rotational speed difference value is zero, however, it is considered that the engaged state may be maintained.

For example, the crank sensor SE2 (Fig. 16) detects the teeth of the gear attached to the crank 2, to detect the angle of the crank 2. The main shaft sensor SE5 (Fig. 16) detects the teeth of the gear attached to the main shaft 5a, to detect the angle of the main shaft 5a. Therefore, a measurement error occurs by the number of teeth of the gear attached to the crank 2 and the number of teeth of the gear attached to the main shaft 5a. Although in a region R1 indicated by a dotted line in Fig. 22(a), the clutch 3S is in the engaged state, therefore, neither the inconsistency period of time nor the rotational speed difference value is zero due to the measurement error.

The crank sensor SE2 and the main shaft sensor SE5 respectively output electrical signals. The electrical signals are affected by noises when transmitted to the ECU 50 illustrated in Fig. 16. Although in a region R2 indicated by a dotted line in Fig. 22(a), the clutch 3S is in the engaged state, therefore, neither the inconsistency period of time nor the rotational speed difference value is zero due to the effect of the noises.

Furthermore, backlash (a gap between a plurality of gears) exists in a power transmission mechanism between the crank 2 and the main shaft 5a. Although in a region R3 indicated by a dotted line in Fig. 22(a), the clutch 3S is in the engaged state, therefore, neither the inconsistency period of time nor the rotational speed difference value is zero due to the backlash in the power transmission mechanism.

As described above, as to the setting of the clutch disengagement flag, the operating state of the back torque limiter mechanism (Fig. 10) is treated in the same way as not the disengaged state of the clutch 3S but the engaged state of the clutch 3S.

When the clutch disengagement flag is switched from the OFF state to the ON state, therefore, a case where the back torque limiter mechanism is in the operating state must also be considered. When the back torque limiter mechanism enters the operating state (Fig. 10), the torque transmitted from the crank 2 to the main shaft 5a is temporarily reduced. Therefore, in a region R4 indicated by a dotted line in Fig. 22(a), the back torque limiter mechanism enters the operating state so that neither the inconsistency period of time nor the rotational speed difference value is zero.

From these reasons, it can be considered that the clutch 3S is in the engaged state in the regions R1, R2, R3, and R4 illustrated in Fig. 22(a) even when neither the inconsistency period of time nor the rotational speed difference value is zero. In other words, the clutch 3S is in the disengaged state in a region excluding the regions R1, R2, R3, and R4 illustrated in Fig. 22(a).

In this example, a region including the regions R1 to R4 illustrated in Fig. 22(a) is a region where the clutch disengagement flag is OFF, and the region excluding the regions R1 to R4 is a region where the clutch disengagement flag is ON.

The first period threshold value U1 and the rotational speed threshold value Th are set with a point PK1 where both the inconsistency period of time and the rotational speed difference value are low within the region where the clutch disengagement flag is OFF as illustrated in Fig. 22(a) used as a basis.

Thus, the ON/OFF state of the clutch disengagement flag is accurately and quickly switched when the clutch 3S is shifted from the engaged state to the disengaged state.

### (8-2) Second Period Threshold Value and Rotational Speed Threshold Value

As described above, when the clutch disengagement flag is switched from the ON state to the OFF state, the second period threshold value U2 and the rotational speed threshold value Th are used.

The second period threshold value U2 and the rotational speed threshold value Th are set in consideration of the following points.

Fig. 22(b) is a graph used for setting the second period threshold value U2 and the rotational speed threshold value. In this graph, the ordinate represents an inconsistency period of time, and the abscissa represents a rotational speed difference value, similarly to the graph of Fig. 22(a).

In Fig. 22(b), it can also be considered that the clutch 3S is in the engaged state in regions R1, R2, and R3 respectively indicated by dotted lines from similar reasons to the above.

However, in Fig. 22(b), the region R4 illustrated in Fig. 22(a) need not be considered. The reason for this is that the back torque limiter mechanism is not shifted to the operating state when the clutch S3 is in the disengaged state.

Therefore, in this example, a region including the regions R1 to R3 illustrated in Fig. 22(b) is a region where the clutch disengagement flag is OFF, and a region excluding the regions R1 to R3 is a region where the clutch disengagement flag is ON.

The second period threshold value U2 and the rotational speed threshold value Th are set with a point PK2 where both the inconsistency period of time and the rotational speed difference value are low within the region where the clutch disengagement flag is OFF as illustrated in Fig. 22(b) used as a basis.

Thus, the ON/OFF state of the clutch disengagement flag is accurately and quickly switched when the clutch 3S is shifted from the disengaged state to the engaged state.

### (9) Effects

### (9-1)

In the present preferred embodiment, the actual rotational speed SR is calculated based on the detected value of the crank sensor SE2 illustrated in Fig. 3. The rotational speed of the main shaft 5a is calculated based on the detected value of the main shaft sensor SE5 illustrated in Fig. 3, and a value found by multiplying the rotational speed by the primary reduction gear ratio is calculated as an estimated value of the rotational speed of the crank 2 (the operated rotational speed SC).

The state of the clutch 3S illustrated in Fig. 6 is determined based on the operated rotational speed SC and the actual rotational speed SR, which have been calculated.

When the clutch 3 is in the engaged state, the rotation of the crank 2 in the engine 107 is transmitted to the rear wheel 115 through the main shaft 5a in the transmission 5. In this state, the output of the engine 107 is adjusted so that the rider can perform a smooth shifting operation.

On the other hand, when the clutch 3 is in the disengaged state, the rotation of the crank 2 in the engine 107 is not transmitted to the rear wheel 115. In this state, the adjustment of the output of the engine 107 is inhibited. This prevents a shift shock from occurring when the clutch 3C is shifted from the disengaged state to the engaged state. This prevents the reduction in the traveling feeling of the rider.

### (9-2)

As described above, the operated rotational speed SC is easily calculated from the detected value of the main shaft sensor SE5 and the primary reduction gear ratio. This enables the engaged state and the disengaged state of the clutch 3S to be easily and accurately determined.

### (9-3)

As described above, the rotational speed threshold value Th is previously set in the ECU 50. The rotational speed allowable range RA is set based on the actual rotational speed SR and the rotational speed threshold value Th. The clutch disengagement flag is set to the OFF state when the operated rotational speed SC is within the rotational speed allowable range RA, while being set to the ON state when the operated rotational speed SC is outside the rotational speed allowable range RA.

In other words, the CPU 502 in the ECU 50 sets the clutch disengagement flag to the OFF state when the difference value between the operated rotational speed SC and the actual rotational speed SR is the rotational speed threshold value Th or less. The CPU 502 sets the clutch disengagement flag to the ON state when the difference value between the operated rotational speed SC and the actual rotational speed SR is the rotational speed threshold value Th or more.

This prevents the clutch disengagement flag from being erroneously brought into the ON state when the clutch 3S is in the engaged state and the difference value between the operated rotational speed SC and the actual rotational speed SR is not zero. More specifically, the clutch 3S is prevented from being erroneously determined to be in the disengaged state when engaged.

### (9-4)

As described above, during the flag setting operation, the first period threshold value U1 is used when the clutch disengagement flag is switched from the OFF state to the ON state.

This prevents the clutch disengagement flag from being erroneously switched from the OFF state to the ON state when the clutch 3S is not shifted from the engaged state to the disengaged state at the time point where the operated rotational speed SC departs from the rotational speed allowable range RA. More specifically, the clutch 3S is prevented from being erroneously determined to be shifted to the disengaged state when engaged.

### (9-5)

As described above, during the flag setting operation, the second period threshold value U2 is used when the clutch disengagement flag is switched from the ON state to the OFF state.

Therefore, the clutch disengagement flag is prevented from being erroneously switched from the ON state to the OFF state when the clutch 3S is not shifted from the disengaged state to the engaged state at the time point where the operated rotational speed SC enters the rotational speed allowable range RA. More specifically, the clutch 3S is prevented from being erroneously determined to be shifted to the engaged state when disengaged.

### (9-6)

As described above, the first period threshold value U1 is set longer than the second period threshold value U2. This prevents the clutch disengagement flag from being erroneously switched from the OFF state to the ON state when the back torque limiter mechanism operates. More specifically, the clutch 3S is prevented from being erroneously determined to be shifted from the engaged state to the disengaged state when the back torque limiter mechanism is in the operating state.

### (10) Another Embodiment

Although in the above-mentioned preferred embodiment, the operated rotational speed SC is calculated by multiplying the detected value of the main shaft sensor SE5 illustrated in Fig. 16 by the primary reduction gear ratio, the operated rotational speed SC may be calculated by multiplying the detected value of the drive shaft sensor SE6 illustrated in Fig. 16 by the primary reduction gear ratio and a secondary reduction gear ratio in the transmission 5.

The secondary reduction gear ratio can be acquired by previously storing a reduction gear ratio corresponding to each of gear positions of the transmission 5 in the RAM 504 illustrated in Fig. 16, detecting the gear position of the transmission 5 based on the detected value of the shift cam sensor SE4, and extracting a reduction gear ratio corresponding to the gear position from the RAM 504.

Although in the above-mentioned preferred embodiment, the ON/OFF state of the clutch disengagement flag is switched based on the difference value between the operated rotational speed SC and the actual rotational speed SR, the ON/OFF state of the clutch disengagement flag may be switched in the following manner.

For example, the ON/OFF state of the clutch disengagement flag may be switched, after dividing the detected value of the crank sensor SE2 illustrated in Fig. 16 by the primary reduction gear ratio to calculate the rotational speed of the main shaft 5a (Fig. 3), using the calculated value and the detected value of the main shaft sensor SE5.

Although in the above-mentioned preferred embodiment, the transmission 5 has a gear ratio corresponding six gear positions, the transmission 5 may have a gear ratio corresponding to five or less gear positions or a gear ratio corresponding to seven or more gear positions.

Although the case where the return-type transmission system is applied to the shifting mechanism 7 (Fig. 3) has been described, the transmission system applied to the shifting mechanism 7 is not limited to the return type. For example, a rotary-type transmission system may be applied to the shifting mechanism 7.

In a motorcycle 100 including a rotary-type shifting mechanism 7, two shift pedals are provided. In this case, two load sensors SE7 may be respectively provided to correspond to the shift pedals. Alternatively, only one load sensor SE7 may be provided to correspond to one of the shift pedals.

The method for adjusting the output of the engine 107 is not limited to the above-mentioned example. For example, the output of the engine 107 may be reduced when the rider performs the up-shifting operation of the transmission 5, while being increased when the rider performs the down-shifting operation of the transmission 5.

Although the motorcycle 100 has been described as an example of the saddle-straddling type vehicle, the vehicle may be other saddle-straddling type vehicles such as three-wheelers and four-wheelers.

### (11) Correspondences between constituent elements in the claims and parts in embodiments

In the following two paragraphs, non-limiting examples of correspondences between various elements recited in the claims below and those described above with respect to various preferred embodiments of the present invention are explained.

In the preferred embodiments described above, the rotational speed of the crank 2 calculated based on the detected value of the crank sensor SE2 is an example of a first rotational speed, the crank sensor SE2 is an example of a first rotational speed detector, the rotational speed of the main shaft 5a calculated based on the detected value of the main shaft sensor SE5 or the rotational speed of the drive shaft 5b calculated based on the detected value of the drive shaft sensor SE6 is an example of a second rotational speed, and the main shaft sensor SE5 or the drive shaft sensor SE6 may be an example of a second rotational speed detector.

The accelerator opening sensor SE1, the crank sensor SE2, the throttle sensor SE3, the shift cam sensor SE4, the main shaft sensor SE5, the ignition plug 78, the ETV 82, and the injector 108 are examples of an adjuster, and the CPU 50 in the ECU 50 is an example of a controller.

Furthermore, the primary reduction gear 3G or the plurality of gears provided in the primary reduction gear 3G and the transmission 5 is an example of a speed reduction mechanism, and the operated rotational speed is an example of an estimated value, and the actual rotational speed is an example of the other rotational speed.

The rotational speed threshold value Th is an example of a threshold value, the period of the first period threshold value U1 is an example of a first period, the period of the second period threshold value U2 is an example of a second period, the main shaft 5a or the drive shaft 5b is an example of a rotating shaft, the rear wheel 115 is an example of a driving wheel, and the motorcycle 100 is an example of a saddle-straddling type vehicle.

As each of various elements in the claims, various other elements having configurations or functions described in the claims may be also used.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A control system that controls the output of an engine (107), for a vehicle that transmits the rotation of a crank shaft (2) in an engine (107) to a driving wheel (115) through a clutch (3) and a transmission (5) that comprises a speed reduction mechanism (7) that is adapted to transmit the rotation of the crank shaft (2) to a rotating shaft (5a, 5b) at a predetermined reduction gear ratio, the control system comprising:
a first rotational speed detector (SE2) that is adapted to detect the rotational speed of the crank shaft (2) in the engine (107);
a second rotational speed detector (SE5, SE6) that is adapted to detect the rotational speed of the rotating shaft (5a, 5b) in the transmission (5);
an adjustor that is adapted to adjust the output of the engine (107); and
a controller (50) that is adapted to determine an engaged state and a disengaged state of the clutch (3), and to inhibit the output of the engine (107) from being adjusted by the adjuster when the clutch (3) is determined to be in the disengaged state,
**characterized in that**
the controller (50) is adapted to estimate the rotational speed of the crank shaft (2) based on the rotational speed of the rotating shaft (5a, 5b) detected by the second rotational speed detector (SE5, SE6) and the reduction gear ratio, and to determine that the clutch (3) is shifted from the engaged state to the disengaged state when a state where a difference value between the estimated value (SC) and the rotational speed (SR) of the crank shaft (2) detected by the first rotational speed detector (SE2) is more than a predetermined upper limit or is less than a predetermined lower limit is continued for a first period (U1) previously set, or alternatively
the controller (50) is adapted to estimate the rotational speed of the rotating shaft (5a, 5b) based on the rotational speed of the crank shaft (2) detected by the first rotational speed detector (SE2) and the reduction gear ratio, and to determine that the clutch (3) is shifted from the engaged state to the disengaged state when a state where a difference value between the estimated value and the rotational speed of the rotating shaft (5a, 5b) detected by the second rotational speed detector (SE5, SE6) is more than the predetermined upper limit or is less than the predetermined lower limit is continued for the first period (U1) previously set.

2. The control system according to claim 1, wherein the controller (50) is adapted to determine that the clutch (3) is shifted from the disengaged state to the engaged state when the state where the difference value is the upper limit or less and is the lower limit or more is continued for a second period (U2) previously set.

3. The control system according to claim 2, wherein
the clutch (3) comprises a back torque limiter mechanism that is adapted to operate such that a difference occurs between the rotational speed of the crank shaft (2) and the rotational speed of the rotating shaft (5a, 5b) in the transmission (5) when a relative torque generated between the crank shaft (2) and the rotating shaft (5a, 5b) in the transmission (5) exceeds a previously set value, and
the first period (U1) is set longer than the second period (U2).

4. The control system according to any one of claims 1 to 3, wherein an absolute value of the upper limit is equal to an absolute value of the lower limit.

5. A saddle-straddling type vehicle, comprising:
a driving wheel, (115);
an engine (107) including a crank shaft (2);
a transmission (5) that includes a rotating shaft (5a, 5b), and is adapted to transmit the rotation of the crank shaft (2) in the engine (107) to the driving wheel (115) at a plurality of reduction gear ratios depending on different engaging states of a plurality of gears provided in the rotating shaft (5a, 5b);
a clutch (3) provided between the crank shaft (2) in the engine (107) and the rotating shaft (5a, 5b) in the transmission (5); and
the control system according to any one of claims 1 to 4.

## Patentansprüche

1. Ein Steuersystem, das die Ausgabe eines Motors (107) steuert, für ein Fahrzeug, das die Drehung einer Kurbelwelle (2) in einem Motor (107) auf ein Antriebsrad (115) durch eine Kupplung (3) und ein Getriebe (5) überträgt, das einen Geschwindigkeitsreduzierungsmechanismus (7) aufweist, der angepasst ist, um die Drehung der Kurbelwelle (2) auf eine Drehwelle (5a, 5b) bei einem vorbestimmten Untersetzungsverhältnis zu übertragen, wobei das Steuersystem folgende Merkmale aufweist:
einen ersten Drehgeschwindigkeitsdetektor (SE2), der angepasst ist, um die Drehgeschwindigkeit der Kurbelwelle (2) in dem Motor (107) zu erfassen;
einen zweiten Drehgeschwindigkeitsdetektor (SE5, SE6), der angepasst ist, um die Drehgeschwindigkeit der Drehwelle (5a, 5b) in dem Getriebe (5) zu erfassen;
eine Einstelleinrichtung, die angepasst ist, um die Ausgabe des Motors (107) einzustellen; und
eine Steuerung (50), die angepasst ist, um einen Zustand in Eingriff und einen Zustand außer Eingriff der Kupplung (3) zu bestimmen, und zu verhindern, dass die Ausgabe des Motors (107) durch die Einstelleinrichtung eingestellt wird, wenn bestimmt wird, dass die Kupplung (3) in dem Zustand außer Eingriff ist,
**dadurch gekennzeichnet, dass**
die Steuerung (50) angepasst ist, die Drehgeschwindigkeit der Kurbelwelle (2) zu schätzen, basierend auf der Drehgeschwindigkeit der Drehwelle (5a, 5b), erfasst durch den zweiten Drehgeschwindigkeitsdetektor (SE5, SE6), und dem Untersetzungsverhältnis, und um zu bestimmen, dass die Kupplung (3) aus dem Zustand in Eingriff in den Zustand außer Eingriff verschoben wird, wenn ein Zustand, wo ein Differenzwert zwischen dem geschätzten Wert (SC) und der Drehgeschwindigkeit (SR) der Kurbelwelle (2), erfasst durch den ersten Drehgeschwindigkeitsdetektor (SE2), mehr ist als eine vorbestimmte Obergrenze oder weniger ist als eine vorbestimmte Untergrenze, für eine erste Periode (U1) fortgesetzt wird, die vorangehend eingestellt wurde, oder alternativ
die Steuerung (50) angepasst ist, die Drehgeschwindigkeit der Drehwelle (5a, 5b) zu schätzen, basierend auf der Drehgeschwindigkeit der Kurbelwelle (2), erfasst durch den ersten Drehgeschwindigkeitsdetektor (SE2), und dem Untersetzungsverhältnis, und um zu bestimmen, dass die Kupplung (3) aus dem Zustand in Eingriff in den Zustand außer Eingreif verschoben wird, wenn ein Zustand, wo ein Differenzwert zwischen dem geschätzten Wert und der Drehgeschwindigkeit der Drehwelle (5a, 5b), erfasst durch den zweiten Drehgeschwindigkeitsdetektor (SE5, SE6), mehr ist als die vorbestimmte Obergrenze oder weniger ist als die vorbestimmte Untergrenze, fortgesetzt wird für die erste Periode (U1), die vorangehend eingestellt wurde.

2. Das Steuersystem gemäß Anspruch 1, bei dem die Steuerung (50) angepasst ist, zu bestimmen, dass die Kupplung (3) aus dem Zustand außer Eingriff in den Zustand in Eingriff verschoben wird, wenn der Zustand, wo der Differenzwert die Obergrenze oder kleiner ist und die Untergrenze oder mehr ist, fortgesetzt wird für eine zweite Periode (U2), die vorangehend eingestellt wurde.

3. Das Steuersystem gemäß Anspruch 2, bei dem
die Kupplung (3) einen Begrenzermechanismus für das hintere Drehmoment aufweist, der angepasst ist, derart zu arbeiten, dass eine Differenz auftritt zwischen der Drehgeschwindigkeit der Kurbelwelle (2) und der Drehgeschwindigkeit der Drehwelle (5a, 5b) in dem Getriebe (5), wenn ein relatives Drehmoment, das zwischen der Kurbelwelle (2) und der Drehwelle (5a, 5b) in dem Getriebe (5) erzeugt wird, einen vorangehend eingestellten Wert überschreitet, und
die erste Periode (U1) länger eingestellt ist als die zweite Periode (U2).

4. Das Steuersystem gemäß einem der Ansprüche 1 bis 3, bei dem ein absoluter Wert der Obergrenze gleich einem absoluten Wert der Untergrenze ist.

5. Ein Sattel-Spreiz-Typ-Fahrzeug, das folgende Merkmale aufweist:
ein Antriebsrad (115);
einen Motor (107), der eine Kurbelwelle (2) umfasst;
ein Getriebe, das eine Drehwelle (5a, 5b) umfasst und angepasst ist, die Drehung der Kurbelwelle (2) in dem Motor (107) auf das Antriebsrad (115) bei einer Mehrzahl von Untersetzungsverhältnissen zu übertragen, abhängig von unterschiedlichen Eingriffszuständen einer Mehrzahl von Getrieberädern, die in der Drehwelle (5a, 5b) bereitgestellt sind;
eine Kupplung (3), die zwischen der Kurbelwelle (2) in dem Motor (107) und der Drehwelle (5a, 5b) in dem Getriebe (5) bereitgestellt ist; und
das Steuersystem gemäß einem der Ansprüche 1 bis 4.

## Revendications

1. Système de commande qui commande la sortie d'un moteur (107) pour un véhicule, qui transmet la rotation d'un vilebrequin (2) dans un moteur (107) à une roue d'entraînement (115) par l'intermédiaire d'un embrayage (3) et d'une transmission (5) qui comprend un mécanisme de réduction de vitesse (7) qui est adapté pour transmettre la rotation du vilebrequin (2) à un arbre de rotation (5a, 5b) à un rapport d'engrenages de réduction prédéterminé, le système de commande comprenant:
un premier détecteur de vitesse de rotation (SE2) qui est adapté pour détecter la vitesse de rotation du vilebrequin (2) dans le moteur (107),
un deuxième détecteur de vitesse de rotation (SE5, SE6) qui est adapté pour détecter la vitesse de rotation de l'arbre de rotation (5a, 5b) dans la transmission (5);
un ajusteur qui est adapté pour ajuster la sortie du moteur (107), et
un contrôleur (50) qui est adapté pour déterminer un état en prise et un état hors prise de l'embrayage (3), et pour inhiber que la sortie du moteur (107) ne soit ajustée par l'ajusteur lorsque l'embrayage (3) est déterminée comme étant à l'état hors prise,
**caractérisé par le fait que**
le contrôleur (50) est adapté pour estimer la vitesse de rotation du vilebrequin (2) sur base de la vitesse de rotation de l'arbre de rotation (5a, 5b) détectée par le deuxième detecteur de vitesse de rotation (SE5, SE6) et le rapport d'engrenages de réduction, et pour déterminer que l'embrayage (3) est déplacé par rapport à l'état en prise à l'état hors prise lorsqu'un état où une valeur de différence entre la valeur estimée (SC) et la vitesse de rotation (SR) du vilebrequin (2) détectée par le premier détecteur de vitesse de rotation (SE2) est supérieure à une limite supérieure prédéterminée ou est inférieure à une limite inférieure prédéterminée est continué pendant un premier laps de temps (U1) réglé auparavant, ou alternativement,
le contrôleur (50) est adapté pour estimer la vitesse de rotation de l'arbre de rotation (5a, 5b) sur base de la vitesse de rotation du vilebrequin (2) détectée par le premier détecteur de vitesse de rotation (SE2) et le rapport d'engrenages de réduction, et pour déterminer que l'embrayage (3) est déplacé de l'état en prise à l'état hors prise lorsqu'un état où une valeur de différence entre la valeur estimée et la vitesse de rotation de l'arbre de rotation (5a, 5b) détectée par le deuxième détecteur de vitesse de rotation (SE5, SE6) est supérieure à la limite supérieure prédéterminée ou est inférieure à la limite inférieure prédéterminée est continué pendant le premier laps de temps (U1) réglé auparavant.

2. Système de commande selon la revendication 1, dans lequel le contrôleur (50) est adapté pour déterminer que l'embrayage (3) est déplacé de l'état hors prise à l'état en prise lorsque l'état où la valeur de différence est la limite supérieure ou moins et est la limite inférieure ou plus est continué pendant un deuxième laps de temps (U2) réglé auparavant.

3. Système de commande selon la revendication 2, dans lequel l'embrayage (3) comprend un mécanisme limiteur de couple en arrière qui est adapté pour fonctionner de sorte qu'une différence se produise entre la vitesse de rotation du vilebrequin (2) et la vitesse de rotation de l'arbre de rotation (5a, 5b) dans la transmission (5) lorsqu'un couple relatif généré entre le vilebrequin (2) et l'arbre de rotation (5a, 5b) dans la transmission (5) excède une valeur réglée auparavant, et
le premier laps de temps (U1) est réglé plus long que le deuxième laps de temps (U2).

4. Système de commande selon l'une quelconque des revendications 1 à 3, dans lequel une valeur absolue de la limite supérieure est égale à une valeur absolue de la limite inférieure.

5. Véhicule de type a enfourcher, comprenant:
une roue d'entraînement (115);
un moteur (107) comportant un vilebrequin (2);
une transmission (5) qui comporte un arbre rotation (5a, 5b), et qui est adaptée pour transmettre la rotation du vilebrequin (2) dans le moteur (107) à la roue d'entraînement (115) à une pluralité de rapports d'engrenages de réduction en fonction de différents états en prise d'une pluralité d'engrenages prévus dans l'arbre rotation (5a, 5b);
un embrayage (3) prévu entre le vilebrequin (2) dans le moteur (107) et l'arbre de rotation (5a, 5b) dans la transmission (5); et
le système de commande selon l'une quelconque des revendications 1 à 4.
